# EUROPEAN PATENT SPECIFICATION

(11) **EP 1 553 195 B1**
(45) Date of publication and mention of the grant of the patent: **10.10.2018**
(21) Application number: 05000231.0
(22) Date of filing: 07.01.2005
(51) Int. Cl.: C22C 23/02

(54) **Die casting magnesium alloy and magnesium die casting**
Magnesiumlegierung für Druckguss und Magnesiumdruckguss
Alliage à coulee au magnesium et moulage mecanique de magnesium

(30) Priority: 09.01.2004 JP 2004004285; 14.06.2004 JP 2004175334; 31.08.2004 JP 2004252764
(43) Date of publication of application: 13.07.2005
(73) Proprietor: Advanced Technologies, Inc., Shizuoka-ken 412-0047 (JP); Higashi, Kenji, Tondabayashi-shi, Osaka 584-0073 (JP)
(72) Inventor: Suzuki, Kuniteru, Minato-ku, Tokyo 106-8510 (JP); Hirai, Kinji, Minato-ku, Tokyo 106-8510 (JP); Nishinaga, Hiroshi, Minato-ku, Tokyo 106-8510 (JP); Higashi, Kenji, Osaka 584-0073 (JP)
(74) Representative: Banzer, Hans-Jörg

(56) References cited:
- EP-A- 0 665 299
- EP-A- 1 347 074
- EP-A1- 1 308 530
- EP-B- 0 799 901
- WO-A-01/44529
- WO-A-03/046239
- US-A- 5 669 990
- US-A- 6 139 651
- US-B1- 6 342 180

## Description

The present invention relates to a lightweight magnesium alloy having a high specific rigidity. In particular, the present invention relates to a die casting magnesium alloy and a magnesium die casting including the same.

### [Background Art]

Among alloys used in large amount, magnesium alloys are lightest alloys and have a high specific rigidity. The majority of casting Mg alloys used for notebook personal computers, cellular phones, portable electric tools, and the like is an AZ91 alloy. This AZ91 alloy has excellent strength, corrosion resistance, moldability, and the like, and is widely used as a balanced casting alloy for die casting. However, this AZ91 alloy is unsuitable for applications to automobiles, motorcycles, and the like required to have high mechanical properties with respect to elongation, bending, and heat resistance. Consequently, in general, AM60-based alloys and AM50-based alloys containing a reduced amount of aluminum and having improved elongation are used for these applications.

On the other hand, in recent years, demands for weight reduction of automobile components have been intensified. In addition, covers disposed in the vicinity of car-mounted engines also tend to be made of Mg alloys. Therefore, development of new alloys provided with heat resistance has been actively pursued (for example, refer to Patent Document 1) .

This alloy disclosed in PCT Japanese Translation Patent Publication No. 2003-517098 is produced by improving the AM 50 alloy or the AM 60 alloy. The base thereof is aluminum (Al): 2 to 9 percent by weight and strontium (Sr): 0.5 to 7 percent by weight, preferably is Al: 4 to 6 percent by weight, and is Al: 4.5 to 5.5 percent by weight and zinc (Zn): 0.35 percent by weight or less (AM alloy level). The comparison between the alloy based on the above-described known technology and the AZ alloy is described in, for example, Pekguleryuz and Baril, Development of Creep Resistant Mg-Al-Sr Alloys, Magnesium Technology 2001 (TMS). Fig. 17 is a diagram showing the content of comparisons described in this document.

Furthermore, Japanese Unexamined Patent Application Publication No. 9-316586 shows an example in which improvements of heat resistance and abrasion resistance of the automobile Mg alloy by silicon (Si), rare earth (RE), or the like are attempted. An alloy is shown as an example in which components are composed of RE: 0.1 to 4 percent by weight, Si: 0.7 to 5 percent by weight, manganese (Mn): 1 percent by weight or less, zirconium (Zr): 1 percent by weight or less, calcium (Ca): 4 percent by weight or less, Al: 10 percent by weight or less, Zn: 5 percent by weight or less, and silver (Ag): 5 percent by weight or less.

The WE alloy based on ASTM standard is known as a Mg alloy containing yttrium (Y). The components of the WE alloy is Y: 1 to 6 percent by weight, lanthanoid (La): 5 percent by weight or less, and Zr: 1 percent by weight or less. The WE alloy is specified as an alloy having high heat resistance. Furthermore, for example, Japanese Unexamined Patent Application Publication No. 6-200348 discloses alloys containing Y and scandium (Sc).

The alloy described in this document is composed of Al: 1 to 9.5 percent by weight, La: 0.5 to 5 percent by weight, Ca: 0.5 to 5 percent by weight, Mn or Zr: 1.5 percent by weight or less, and the remainder containing Mg and inevitable purities. The room temperature strength and the high temperature strength of the alloy described in this document is improved by further containing at least one selected from the group consisting of Y: 5.5 percent by weight or less, Sr: 1.5 percent by weight or less, and Sc: 10 percent by weight or less in addition to the above-described materials.

The Japanese Unexamined Patent Application Publication No. 6-200348 describes that the room temperature strength and the high temperature strength of the alloy are improved when the above-described materials are contained. However, no appropriate example constituting grounds therefore is described and, therefore, the effect is not clear. Since it is described that the amount of addition of Al in the alloy disclosed in Patent Document 3 is preferably 3% to 7% and that Al, Zn, or Ag is added, the alloy is assumed to be an alloy not belonging to a so-called AZ alloy.

On the other hand, Japanese Unexamined Patent Application Publication No. 2003-129162 discloses Mg alloys containing tin (Sn). The alloys disclosed in this document are an alloy containing cerium (Ce): 2.0 to 10.0 percent by weight and Sn: 1.4 to 7.0 percent by weight, and an alloy containing less than 1 percent by weight of Zr, Sr, and Mn in addition to them. The effect described is that the alloys have excellent high-temperature creep strength. However, these alloys are not belonging to the AZ alloy. The example shows only gravity casting, and the melt fluidity and the moldability are not referred to. The application to automobile components, e.g., engines, is disclosed, but the moldability responsible for mass production is not described. Although Al alloys include light alloys containing barium (Ba),no precedent is found with respect to Mg alloys.

European patent application EP 1 308 530 A1 describes a magnesium based alloy containing at least 86 wt% Mg; 4.8 to 9.2 wt% aluminum, 0.08 to 0.38 wt% manganese, 0.00 to 0.9 wt% zinc, 0.2 to 1.2 wt% calcium, 0.05 to 1.4 wt% strontium, and 0.00 to 0.8 wt% rare earth elements. The alloy may also comprise up to 0.02 wt% zirconium and up to 0.001 wt% beryllium.

### [Problems to be Solved by the Invention]

However, the above-described known alloys (produced by improving the AM 50 alloy or the AM 60 alloy) include the following problems.

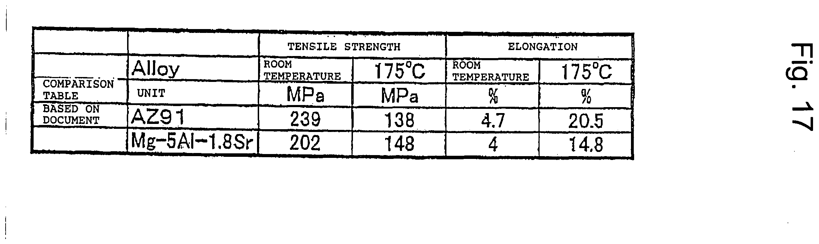

In Fig. 17, the lower row indicates an example of alloys disclosed in the above-described known technology (hereafter appropriately referred to as known alloys). The tensile strength of this alloy at room temperature (ambient temperature) is about 15% lower than that of the AZ91 alloy. Although the tensile strength at 175°C is improved by about 7%, the elongation values at room temperature and at 175°C are reduced. The creep characteristic value and the like is actually improved. However, when the material is used practically, since the material is exposed to from room temperature to a high temperature of about 175°C, the properties at room temperature cannot be neglected. In the above-described known technology, such a point is not taken into consideration and, therefore, reduction of the strength at room temperature cannot be prevented.

It is an object of the present invention to provide a die casting magnesium alloy capable of improving the high-temperature creep characteristics without causing reduction of the room temperature strength and a magnesium die casting including the same.

### [Means for Solving the Problems]

According to the present invention, this object is achieved by a die casting magnesium alloy as defined in claim 1 and by a magnesium die casting as defined in claim 3. The dependent claim 2 defines a preferred and advantageous embodiment of the invention.

Other alloys or castings are mentioned herein only for comparison or reference.

In order to achieve the above-described objects, a die casting magnesium alloy according to a first aspect of the present invention is characterized by containing an AZ91-based alloy composed of 6.0 to 11.0, in particular 7.0 to 11.0, percent by weight of aluminum, 0.1 to 2.5 percent by weight of zinc, 0.1 to 0.5 percent by weight of manganese, 0.1 to 2.5 percent by weight of strontium, 0.1 to 1.5 percent by weight of antimony, and 0.05 to 3.5 percent by weight of calcium; strontium, antimony and calcium are added as grain refining agents to the AZ91-based alloy.

The die casting magnesium alloy optionally comprises: at least one of silicon (Si): 0.1 to 1.5 percent by weight, mish metal containing a simple substance of rare earth (RE): 0.1 to 1.2 percent by weight, zirconium (Zr): 0.2 to 0.8 percent by weight, scandium (Sc): 0.2 to 3.0 percent by weight, yttrium (Y): 0.2 to 3.0 percent by weight, tin (Sn): 0.2 to 3.0 percent by weight, and barium (Ba): 0.2 to 3.0 percent by weight.

In the composition of the first aspect, an alloy serving as a base is specified to be the so-called AZ91-based alloy composed of 6.0 (or 7.0) to 11.0 percent by weight of aluminum, 0.1 to 2.5 percent by weight of zinc, and 0.1 to 0.5 percent by weight of manganese, and Sb, Ca, and Sr are added thereto. That is, the die casting magnesium alloy of the present invention consists of the AZ91-based alloy as the main component and strontium, antimony and calcium, additionally preferably at least one of silicon, rare earth zirconium, scandium, yttrium, tin, and barium, as additional components. Since the base is specified to be the AZ91 base, reduction of the strength characteristics at room temperature can be prevented in contrast to that in the AM60-based alloys. By adding Sb, Ca, and Sr as grain refining agents to the AZ91-based alloy, the alloy structure can be improved and the crystal grain size can be made fine, and excellent high-temperature creep characteristics equivalent to the characteristics of an AS21 alloy known as a heat-resistant magnesium alloy can be attained. As a result, an alloy having improved high-temperature creep characteristics can be realized without causing reduction of the room temperature strength.

In order to achieve the above-described objects, a die casting magnesium alloy according to a first embodiment (not claimed) is characterized by containing an AZ91-based alloy composed of 7.0 to 11.0 percent by weight of aluminum, 0.1 to 2.5 percent by weight of zinc, and 0.1 to 0.5 percent by weight of manganese; 1.0 to 3.5 percent by weight of calcium and 0.1 to 1.5 percent by weight of strontium which are added to the AZ91-based alloy; and inevitably included other components.

In the composition of the first embodiment, an alloy serving as a base is specified to be the so-called AZ91-based alloy composed of 7.0 to 11.0 percent by weight of aluminum, 0.1 to 2.5 percent by weight of zinc, and 0.1 to 0.5 percent by weight of manganese, and Ca and Sr are added thereto. Since the base is specified to be the AZ91 base, reduction of the strength characteristics at room temperature can be prevented in contrast to that in the AM60-based alloys. By adding Ca and Sr as grain refining agents to the AZ91-based alloy, the alloy structure can be improved and the crystal grain size can be made fine. At this time, particularly by specifying the amount of addition of calcium and strontium at calcium 1.0 to 3.5 percent by weight and strontium 0.1 to 1.5 percent by weight, the crystal grain size can be reliably controlled at 20 µm or less, and excellent high-temperature creep characteristics equivalent to the characteristics of the AS21 alloy known as a heat-resistant magnesium alloy can be reliably attained. As a result, alloys having improved high-temperature creep characteristics can be reliably realized without causing reduction of the room temperature strength.

Another possibility to overcome the above-described objects, a die casting magnesium alloy according to a second embodiment (not claimed) is characterized by containing an alloy in which at least any one of 0.1 to 1.5 percent by weight of silicon, 0.1 to 1.2 percent by weight of rare earth, and 0.2 to 0.8 percent by weight of zirconium is added to an AZ91-based alloy composed of 6.0 to 11.0 percent by weight of aluminum, 0.1 to 2.5 percent by weight of zinc, and 0.1 to 0.5 percent by weight of manganese; and furthermore strontium and at least any one of antimony and calcium, which are added as grain refining agents to the alloy.

In the second embodiment, at least any one of 0.1 to 1.5 percent by weight of silicon, 0.1 to 1.2 percent by weight of rare earth, and 0.2 to 0.8 percent by weight of zirconium is added to a so-called AZ91-based alloy which is an alloy serving as a base and which is composed of 6.0 to 11.0 percent by weight of aluminum, 0.1 to 2.5 percent by weight of zinc, and 0.1 to 0.5 percent by weight of manganese, so that a base alloy including elements which improve the high-temperature creep characteristics while maintaining the moldability and the room temperature strength is completed. By adding Sb, Ca, and Sr serving as grain refining agents to this AZ91-based alloy, the alloy structure can be improved and the crystal grain size is made fine.

In contrast to the above-described first aspect, any one of silicon, rare earth, and zirconium is added to the base alloy side. These enter the gaps of grain boundary products Mg₁₇Al₁₂ (β phase) and Al₂Ca crystals generated by addition of Ca, which are assumed to be weak points of the AZ91-based alloy, and divide those phases, so that the strength can be increased. However, if excessively high amounts of them are added, harmful effects, e.g., deterioration of moldability, are exerted. Therefore, preferably, silicon is up to 1.5 percent by weight, rare earth is up to 1.2 percent by weight, and zirconium is up to 0.8 percent by weight. As a result, the moldability, which is the feature of the alloy of the present invention, is reliably kept, and the thermal creep resistance can be further improved.

According to a third embodiment (not claimed), the die casting magnesium alloy is characterized by containing an AZ91 alloy composed of aluminum (Al): 6.0 to 11.0 percent by weight, zinc (Zn): 0.1 to 2.5 percent by weight, manganese (Mn): 0.1 to 0.5 percent by weight, and inevitably included other components; at least any one of silicon (Si): 0.1 to 1.5 percent by weight, mish metal containing a simple substance of rare earth (RE): 0.1 to 1.2 percent by weight, zirconium (Zr): 0.2 to 0.8 percent by weight, scandium (Sc): 0.2 to 3.0 percent by weight, yttrium (Y): 0.2 to 3.0 percent by weight, tin (Sn): 0.2 to 3.0 percent by weight, and barium (Ba): 0.2 to 3.0 percent by weight, which is added to the AZ91 alloy so as to produce an AZ91-based base alloy; and strontium (Sr) and at least any one of antimony (Sb) and calcium (Ca), which are added as grain refining agents to the AZ91-based base alloy.

In the above-described third embodiment, at least any one of silicon: 0.1 to 1.5 percent by weight, rare earth: 0.1 to 1.2 percent by weight, zirconium: 0.2 to 0.8 percent by weight, scandium: 0.2 to 3.0 percent by weight, yttrium: 0.2 to 3.0 percent by weight, tin: 0.2 to 3.0 percent by weight, and barium: 0.2 to 3.0 percent by weight is added to the so-called AZ91 alloy containing aluminum: 6.0 to 11.0 percent by weight, zinc: 0.1 to 2.5 percent by weight, and manganese: 0.1 to 0.5 percent by weight, so that the AZ91-based base alloy including elements which improve the high-temperature creep characteristics while maintaining the moldability and the ambient temperature strength is completed. By adding Sb, Ca, and Sr serving as grain refining agents to this AZ91-based base alloy, the alloy structure can be improved and the crystal grain size can be made fine.

That is, any one of silicon, mish metal containing a simple substance of rare earth, zirconium, scandium, yttrium, tin, and barium is added to the AZ91 alloy side. These enter the gaps of grain boundary products Mg₁₇Al₁₂ (β phase) and Al₂Ca crystals generated by addition of Ca, which are assumed to be weak points in the characteristics of the AZ91 alloy, and divide those phases, so that the strength can be increased. However, if excessively high amounts of them are added, harmful effects, e.g., deterioration of moldability, are exerted. Therefore, preferably, silicon is up to 1.5 percent by weight, mish metal containing a simple substance of rare earth is up to 1.2 percent by weight, zirconium is up to 0.8 percent by weight, and scandium, yttrium, tin, and barium are up to 3.0 percent by weight. As a result, the moldability, which is the feature of the alloy of the present invention, is reliably kept, and the thermal creep resistance can be further improved.

A fourth embodiment (no claimed) is characterized in that the die casting magnesium alloy in the above-described first aspect or second embodiment contains 0.1 to 1.5 percent by weight of strontium and at least any one of 0 to 1.5 percent by weight of antimony and 0.2 to 3.5 percent by weight of calcium, which are added as the above-described grain refining agents, and inevitably included other components.

In the fourth embodiment, particularly by specifying the amount of addition of antimony, calcium, and strontium at antimony 0 to 1.5 percent by weight, calcium 0.2 to 3.5 percent by weight, and strontium 0.1 to 1.5 percent by weight, the crystal grain size can be reliably controlled at 20 µm or less, and excellent high-temperature creep characteristics equivalent to the characteristics of the AS21 alloy known as a heat-resistant magnesium alloy can be reliably attained. As a result, alloys having improved high-temperature creep characteristics can be reliably realized without causing reduction of the room temperature strength.

A fifth embodiment (not claimed) is characterized in that the alloy in the above-described third embodiment contains strontium: 0.1 to 2.5 percent by weight and at least any one of antimony: 0.1 to 1.5 percent by weight and calcium: 0.05 to 3.5 percent by weight, which are added as the grain refining agents, and inevitably included other components.

In the above-described fifth embodiment, particularly by specifying the amount of addition of antimony, calcium, and strontium at antimony: 0.1 to 1.5 percent by weight, calcium: 0.05 to 3.5 percent by weight, and strontium: 0.1 to 2.5 percent by weight, the crystal grain size can be reliably controlled at 20 µm or less, and excellent high-temperature creep characteristics equivalent to the characteristics of an AS21 alloy known as a heat-resistant magnesium alloy can be reliably attained. As a result, an alloy having improved high-temperature creep characteristics can be reliably realized without causing reduction of the room temperature strength.

In order to achieve the above-described objects, a die casting magnesium alloy according to a sixth embodiment (not claimed) is characterized by containing an AZ91-based alloy composed of aluminum: 6.0 to 11.0 percent by weight, zinc: 0.1 to 2.5 percent by weight, manganese: 0.1 to 0.5 percent by weight, and inevitably included other components; and strontium: 0.1 to 2.5 percent by weight and at least any one of antimony: 0.1 to 1.5 percent by weight and calcium: 0.05 to 3.5 percent by weight, which are added as grain refining agents to the AZ91-based alloy, and inevitably included other components.

In the composition of the above-described sixth embodiment, a base alloy is specified to be the AZ91-based alloy composed of aluminum: 6.0 to 11.0 percent by weight, zinc: 0.1 to 2.5 percent by weight, manganese: 0.1 to 0.5 percent by weight, and inevitably included other components, and Sb, Ca, and Sr are added thereto. Since the base is specified to be the AZ91 base, reduction of the strength characteristics at room temperature can be prevented in contrast to that in the AM60-based alloy. By adding Sb, Ca, and Sr as grain refining agents to the AZ91-based alloy, the alloy structure can be improved and the crystal grain size can be made fine, and excellent high-temperature creep characteristics equivalent to the characteristics of the AS21 alloy known as a heat-resistant magnesium alloy can be attained. As a result, an alloy having improved high-temperature creep characteristics can be realized without causing reduction of the room temperature strength.

In particular, by specifying the amount of addition of antimony, calcium, and strontium at antimony: 0.1 to 1.5 percent by weight, calcium: 0.05 to 3.5 percent by weight, and strontium: 0.1 to 2.5 percent by weight, the crystal grain size can be reliably controlled at 20 µm or less, and excellent high-temperature creep characteristics equivalent to the characteristics of the AS21 alloy known as a heat-resistant magnesium alloy can be reliably attained. As a result, an alloy having improved high-temperature creep characteristics can be reliably realized without causing reduction of the room temperature strength.

In order to achieve the above-described objects, a magnesium die casting according to a second aspect of the present invention is characterized by being constructed through die-casting of a die casting magnesium alloy according to the invention.

In the second aspect, the alloy used for a magnesium die casting is an alloy having a composition in which Sb, Ca, and Sr are added to the so-called AZ91-based alloy containing 6.0 (or 7.0) to 11.0 percent by weight of aluminum, 0.1 to 2.5 percent by weight of zinc, and 0.1 to 0.5 percent by weight of manganese. Since the base is specified to be the AZ91 base, reduction of the strength characteristics at room temperature can be prevented in contrast to that in the AM60-based alloys. By adding Sb, Ca, and Sr as grain refining agents having effects not impaired by remelting for die casting to the AZ91-based alloy, the alloy structure can be improved and the crystal grain size can be made fine without impairing the melt fluidity, and excellent high-temperature creep characteristics equivalent to the characteristics of the AS21 alloy known as a heat-resistant magnesium alloy can be attained. As a result, die-castings can be produced with good moldability by the use of alloys having improved high-temperature creep characteristics without causing reduction of the room temperature strength.

According to a seventh embodiment (not claimed) the magnesium die casting is characterized by being constructed through die-casting of a die casting magnesium alloy containing an AZ91-based alloy composed of 7.0 to 11.0 percent by weight of aluminum, 0.1 to 2.5 percent by weight of zinc, and 0.1 to 0.5 percent by weight of manganese; 1.0 to 3.5 percent by weight of calcium and 0.1 to 1.5 percent by weight of strontium which are added to the AZ91-based alloy; and inevitably included other components.

In the seventh embodiment, the alloy used for a magnesium die casting is an alloy having a composition in which Ca and Sr are added to the so-called AZ91-based alloy containing 7.0 to 11.0 percent by weight of aluminum, 0.1 to 2.5 percent by weight of zinc, and 0.1 to 0.5 percent by weight of manganese. Since the base of the alloy is specified to be the AZ91 base, reduction of the strength characteristics at room temperature can be prevented in contrast to that in the AM60-based alloys. By adding Ca and Sr as grain refining agents having effects not impaired by remelting for die casting to the AZ91-based alloy, the alloy structure can be improved and the crystal grain size can be made fine without impairing the melt fluidity. At this time, particularly by specifying the amount of addition of calcium and strontium at calcium 1.0 to 3.5 percent by weight and strontium 0.1 to 1.5 percent by weight, the crystal grain size can be reliably controlled at 20 µm or less, and excellent high-temperature creep characteristics equivalent to the characteristics of the AS21 alloy known as a heat-resistant magnesium alloy can be reliably attained. As a result, die-castings can be produced with good moldability by the use of alloys having reliably improved high-temperature creep characteristics without causing reduction of the room temperature strength.

In order to achieve the above-described objects, the magnesium die casting according to a eighth embodiment (not claimed) is characterized by being constructed through die-casting of a die casting magnesium alloy containing an alloy in which at least any one of 0.1 to 1.5 percent by weight of silicon, 0.1 to 1.2 percent by weight of rare earth, and 0.2 to 0.8 percent by weight of zirconium is added to an AZ91-based alloy composed of 6.0 to 11.0 percent by weight of aluminum, 0.1 to 2.5 percent by weight of zinc, and 0.1 to 0.5 percent by weight of manganese; and furthermore, strontium and at least any one of antimony and calcium which are added as grain refining agents to the alloy.

As in the above-described second embodiment, since any one of silicon, rare earth, and zirconium is added to the base alloy side, these enter the gaps of grain boundary products Mg₁₇Al₁₂ (β phase) and Al₂Ca crystals generated by addition of Ca, which are assumed to be weak points of the AZ91-based alloy, and divide those phases, so that the strength can be increased. However, if excessively high amounts of them are added, harmful effects, e.g., deterioration of moldability, are exerted. Therefore, preferably, silicon is up to 1.5 percent by weight, rare earth is up to 1.2 percent by weight, and zirconium is up to 0.8 percent by weight. As a result, the moldability, which is the feature of the alloy of the present invention, is reliably kept, and the thermal creep resistance can be further improved.

The magnesium die casting according to a ninth embodiment (not claimed) is characterized by being produced through die-casting of a die casting magnesium alloy containing an AZ91 alloy composed of aluminum: 6.0 to 11.0 percent by weight, zinc: 0.1 to 2.5 percent by weight, manganese: 0.1 to 0.5 percent by weight, and inevitably included other components; at least any one of silicon: 0.1 to 1.5 percent by weight, mish metal containing a simple substance of rare earth: 0.1 to 1.2 percent by weight, zirconium: 0.2 to 0.8 percent by weight, scandium: 0.2 to 3.0 percent by weight, yttrium: 0.2 to 3.0 percent by weight, tin: 0.2 to 3.0 percent by weight, and barium: 0.2 to 3.0 percent by weight, which is added to the AZ91 alloy so as to produce an AZ91-based base alloy; and furthermore, strontium and at least any one of antimony and calcium, which are added as grain refining agents to the AZ91-based base alloy.

In the above-described ninth embodiment, as in the above-described third embodiment, any one of silicon, mish metal containing a simple substance of rare earth, zirconium, scandium, yttrium, tin, and barium is added to the AZ91 alloy side. These enter the gaps of grain boundary products Mg₁₇Al₁₂ (β phase) and Al₂Ca crystals generated by addition of Ca, which are assumed to be weak points of the AZ91 alloy, and divide those phases, so that the strength can be increased. However, if excessively high amounts of them are added, harmful effects, e.g., deterioration of moldability, are exerted. Therefore, preferably, silicon is up to 1.5 percent by weight, mish metal containing a simple substance of rare earth (hereafter appropriately referred to as RE simply) is up to 1.2 percent by weight, zirconium is up to 0.8 percent by weight, and scandium, yttrium, tin, and barium are up to 3.0 percent by weight. As a result, the moldability, which is the feature of the alloy of the present invention, is reliably kept, and the thermal creep resistance can be further improved.

In a tenth embodiment (not claimed), the magnesium die casting according to the above-described second aspect or eighth embodiment is characterized by being constructed through die-casting of the die casting magnesium alloy containing 0.1 to 1.5 percent by weight of strontium and at least any one of 0 to 1.5 percent by weight of antimony and 0.2 to 3.5 percent by weight of calcium, which are added as the above-described grain refining agents, and inevitably included other components.

In the tenth embodiment, particularly by specifying the amount of addition of antimony, calcium, and strontium at antimony 0 to 1.5 percent by weight, calcium 0.2 to 3.5 percent by weight, and strontium 0.1 to 1.5 percent by weight, the crystal grain size can be reliably controlled at 20 µm or less, and excellent high-temperature creep characteristics equivalent to the characteristics of the AS21 alloy known as a heat-resistant magnesium alloy can be reliably attained. As a result, die-castings can be produced with good moldability by the use of alloys having reliably improved high-temperature creep characteristics without causing reduction of the room temperature strength.

An eleventh embodiment (not claimed) is characterized in that the magnesium die casting in the above-described ninth embodiment is produced through die-casting of the above-described die casting magnesium alloy containing strontium: 0.1 to 2.5 percent by weight and at least any one of antimony: 0.1 to 1.5 percent by weight and calcium: 0.05 to 3.5 percent by weight, which are added as the above-described grain refining agents, and inevitably included other components.

In the eleventh embodiment, particularly by specifying the amount of addition of antimony, calcium, and strontium at antimony: 0.1 to 1.5 percent by weight, calcium: 0.05 to 3.5 percent by weight, and strontium: 0.1 to 2.5 percent by weight, the crystal grain size can be reliably controlled at 20 µm or less, and excellent high-temperature creep characteristics equivalent to the characteristics of the AS21 alloy known as a heat-resistant magnesium alloy can be reliably attained. As a result, die-castings can be produced with good moldability by the use of alloys having improved high-temperature creep characteristics without causing reduction of the room temperature strength.

The magnesium die casting according to a twelfth embodiment (not claimed) is characterized by being produced through die-casting of a die casting magnesium alloy subjected to melting, the die casting magnesium alloy containing an AZ91-based alloy composed of aluminum: 6.0 to 11.0 percent by weight, zinc: 0.1 to 2.5 percent by weight, manganese: 0.1 to 0.5 percent by weight, and inevitably included other components; and strontium: 0.1 to 2.5 percent by weight and at least any one of antimony: 0.1 to 1.5 percent by weight and calcium: 0.05 to 3.5 percent by weight, which are added as grain refining agents to the AZ91-based alloy.

In the twelfth embodiment, the alloy used for the magnesium die casting has a composition in which Sb, Ca, and Sr are added to the so-called AZ91-based alloy containing aluminum: 6.0 to 11.0 percent by weight, zinc: 0.1 to 2.5 percent by weight, manganese: 0.1 to 0.5 percent by weight, and inevitably included other components. Since the base of alloy is specified to be the AZ91 base, reduction of the strength characteristics at room temperature can be prevented in contrast to that in the AM60-based alloys. By adding Sb, Ca, and Sr serving as grain refining agents, which has effects not impaired by remelting for die casting, to the AZ91-based alloy, the alloy structure can be improved and the crystal grain size can be made fine without impairing the melt fluidity. In addition, excellent high-temperature creep characteristics equivalent to the characteristics of the AS21 alloy known as a heat-resistant magnesium alloy can be attained. As a result, die castings can be produced with good moldability by the use of alloys having improved high-temperature creep characteristics without causing reduction of the room temperature strength.

In particular, by specifying the amount of addition of antimony, calcium, and strontium at antimony: 0.1 to 1.5 percent by weight, calcium: 0.05 to 3.5 percent by weight, and strontium: 0.1 to 2.5 percent by weight, the crystal grain size can be reliably controlled at 20 µm or less, and excellent high-temperature creep characteristics equivalent to the characteristics of the AS21 alloy known as a heat-resistant magnesium alloy can be reliably attained. As a result, die castings can be produced with good moldability by the use of alloys having reliably improved high-temperature creep characteristics without causing reduction of the room temperature strength.

### [Advantages]

According to the present invention, since Sb, Ca, and Sr and optionally at least any of Si, RE, Zr, Sc, Y, Sn and Ba are added to the AZ91-based alloy in the composition, reduction of the strength characteristics at room temperature is prevented. Furthermore, the alloy structure can be improved by this addition, the crystal grain size can be made fine, and the high-temperature creep characteristics can be improved reliably.

According to the second and eighth embodiments, the base alloy is specified to be an alloy in which Si, RE, and Zr are added to the AZ91-based alloy to the extent that the moldability is not significantly changed. Consequently, reduction of the strength characteristics at room temperature is prevented, and the moldability is maintained. Since these elements deposit in the gaps of β phases, which deposit at grain boundaries and become a cause of weakness, and divide β phases, the high-temperature creep characteristics can be improved reliably.

### [Brief Description of the Drawings]

Fig. 1 is a diagram showing the melting point characteristic of an alloy in which Sb, Ca, and Sr are added to an AZ91 alloy.
Fig. 2 is a diagram showing the melting points of alloys in which Ca, Si, RE, Sr, and Zr, each 1 percent by weight, are added to respective AZ91 alloys.
Fig. 3 is a diagram showing an effect of addition of refining agent to the AZ91-based alloy.
Fig. 4 is a diagram showing an effect of addition of Sr to an AZ91SbCa alloy.
Fig. 5a and Fig. 5b are each a diagram showing the range of proportion of addition of Sb, Ca, and Sr to the AZ91-based alloy in an embodiment of the present invention.
Fig. 6 is a diagram showing the behavior of change in crystal grain size ratio of an AZ91 alloy and an AZ91SbCaSr alloy.
Fig. 7 is a diagram showing compositions of alloy ingots.
Fig. 8 is a diagram showing the behavior of filling factor of the alloy.
Fig. 9 is a diagram showing the behavior of room temperature tensile strength of the alloy.
Fig. 10 is a diagram showing the behavior of room temperature elongation characteristic of the alloy.
Fig. 11a and Fig. 11b are each a diagram showing the behavior of the relationship between the high-temperature strain rate and the flow stress of the alloy.
Fig. 12a and Fig. 12b are each a diagram showing the behavior of the relationship between the high-temperature strain rate and the creep elongation value of the alloy.
Fig. 13a and Fig. 13b are each a diagram showing the relationship between the high-temperature creep rate and the stress of various magnesium alloys.
Fig. 14 is a diagram showing test conditions of a creep test.
Fig. 15a and Fig. 15b are each a diagram showing compositions of raw ingots used in a corrosion resistance test.
Fig. 16a and Fig. 16b are each a diagram showing the results of the corrosion resistance test.
Fig. 17 is a diagram showing the content of comparisons of alloy characteristics described in known technical documents.
Fig. 18 is a diagram showing the melting point characteristic of an alloy in which Ca and Sr are added to an AZ91 alloy.
Fig. 19 is a diagram showing the change characteristic of the crystal grain size in the case where Ca is added to the AZ91 alloy.
Fig. 20 is a diagram showing the change characteristic of the crystal grain size in the case where Ca and Sr are added to the AZ91 alloy.
Fig. 21 is a diagram showing an example of melting of an AZ91CaSr alloy.
Fig. 22 is a diagram showing the range of proportion of addition of Ca and Sr to the AZ91 alloy.
Fig. 23 is a diagram showing the behavior of change in crystal grain size ratio of the AZ91 alloy and the AZ91CaSr alloy.
Fig. 24 is a diagram showing compositions of alloy ingots.
Fig. 25 is a diagram showing the behavior of filling factor of the alloy.
Fig. 26 is a diagram showing the behavior of room temperature tensile strength of the alloy.
Fig. 27 is a diagram showing the behavior of room temperature elongation characteristic of the alloy.
Fig. 28 is a diagram showing the behavior of the relationship between the high-temperature strain rate and the flow stress of the alloy.
Fig. 29 is a diagram showing the behavior of the relationship between the high-temperature strain rate and the creep elongation value of the alloy.
Fig. 30 is a diagram showing the relationship between the high-temperature creep rate and the stress of various magnesium alloys.
Fig. 31 is a diagram showing compositions of raw ingots used in a corrosion resistance test.
Fig. 32 is a diagram showing the results of the corrosion resistance test.

### [Best Mode for Carrying Out the Invention]

In the context of the following discussion, it is noted that only the alloys defined in claim 1 are according to the invention. Other alloys are mentioned herein only for comparison or reference.

A first embodiment of the present invention with two different parameter values will be described below with respect to the drawings.

The inventors of the present invention conducted various discussions on die casting magnesium alloys and die castings having improved high-temperature creep characteristics while excellent characteristics of the AZ91 alloy are maintained, from the above-described viewpoint of improvement of the high-temperature creep characteristics without causing reduction of the room temperature strength in contrast to known alloys. The concept thereof and the results of discussion will be sequentially described below. In the specification, every % designation refers to percent by weight.

### (1) Reduction of crystal grain size

The inventors of the present invention conducted discussion for the purpose of improving the characteristics of AZ91 alloy die castings. When the AZ91 alloy is subjected to die-casting, the crystal grain size becomes about 40 µm, and crystal grains are significantly made fine compared with the crystal grain size of about 200 to 300 µm of the alloy subjected to usual gravity casting. Therefore, grain refining agent used previously in the gravity casting are believed to be unnecessary for the die-casting. The inventors of the present invention intentionally added the grain refining agent to the die casting alloy, and attempted die-casting of an ingot of this alloy.

Among various grain refining agents, some grain refining agents, such as hexachloroethane, have a high refining effect but releases a chlorine gas when being added, and some grain refining agents, such as metal Na, are attended with significant danger in the handling. In the present invention, Sb, Ca, and Sr were selected as grain refining agents, which had effects not impaired by remelting for die-casting, and combined addition was discussed.

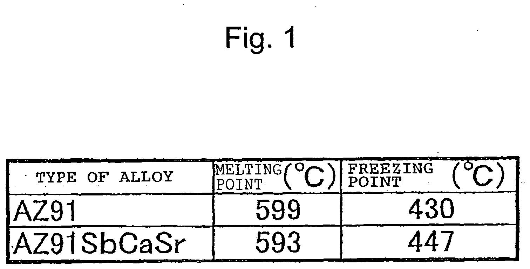

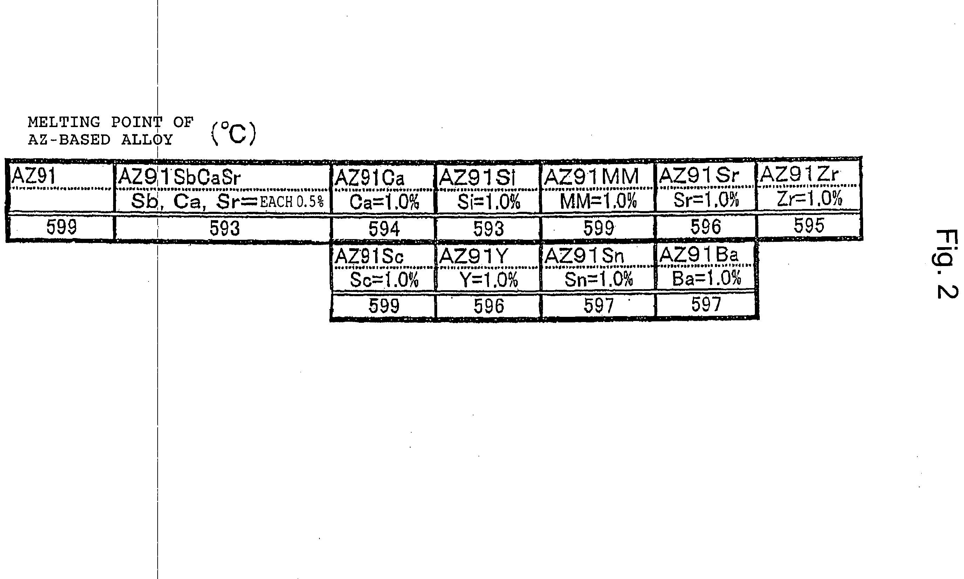

Initially, melting points of the AZ91 alloy and an alloy in which 0.5% of Sb, 0.5% of Ca, and 0.5% of Sr were added to the AZ91 alloy were measured by a furnace cooling method. As a result, it was made clear that the alloy including Sb, Ca, and Sr had a melting point slightly lower than the melting point of the AZ91 alloy (refer to Fig. 1). With respect to other elements as well, 1% of each element was added to the melt of AZ91 alloy, respectively, and the melting point was measured. As a result, it was made clear that every element maintained or reduced the melting point when the amount was small (refer to Fig. 2). When each of the melts was remelted and poured into a respective casting mold, it was ascertained that every melt fluidity (corresponding to die castability in the case of application to a die casting) was good without causing any problem. In Fig. 2, MM (mixed rare earth metal) is used as the RE source, which may contain Ce: 51 percent by weight.

Next, 3 kg of AZ91 alloy was melted in an iron crucible coated with alumina, and was kept at 680°C. Thereafter, predetermined amounts of Ca and Sr were added, and the resulting melt was quickly cast by 100 g with a ladle in a pipe mold (thickness 3 mm, inner diameter 32 mm, depth 53 mm) heated to 100°C, so that a sample was prepared. The sample was transversely cut at the middle portion, and was subjected to a solution treatment at 410°C for 2 hours in order to make grain boundaries clear. Polishing was performed to attain a mirror-finished surface, etching was performed with a 6% picric acid alcohol solution, and microscopic examination was performed. The crystal grain size was determined by a microtome method of a crystal grain size number measuring method in compliance with JIS on iron and steel.

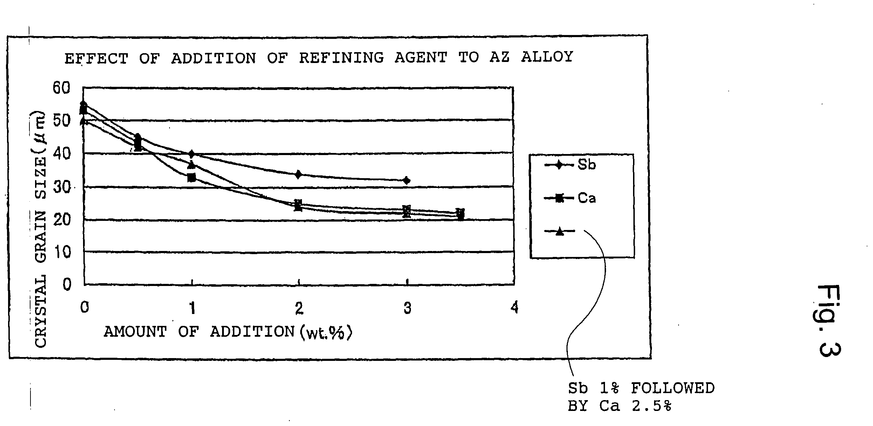

Fig. 3 shows the results of addition of Sb and Ca to the AZ91 alloy. The result indicated by Δ is derived from addition of Sb up to 1% followed by addition of Ca up to 2.5%. It is clear that the effect of Sb is slightly smaller, but an effect substantially equivalent to the effect of Ca is exerted by the addition of Sb and Ca in combination.

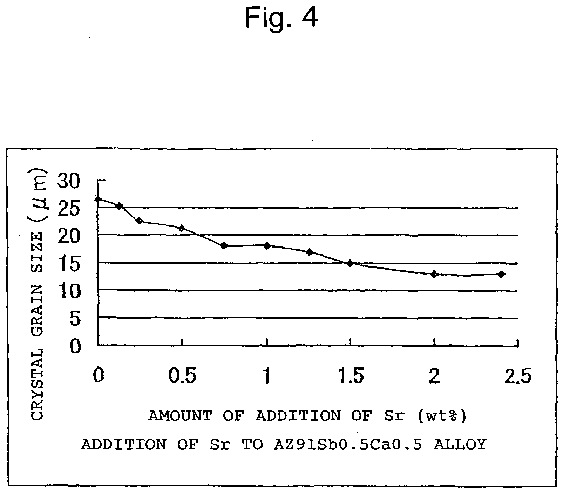

Fig. 4 shows an example in which Sr was added to the melt after the combined addition. When 0.6% or more of Sr was added, the crystal grain size was reduced to 20 µm or less. Likewise, an alloy in which 0.5% to 1.0% each of Si, RE, and Zr are added was subjected to the test, and similar results were exhibited with respect to the crystal grain size. Although respective crystals specific to Si, RE, and Zr appeared dispersedly, the entire crystal grain size was not changed.

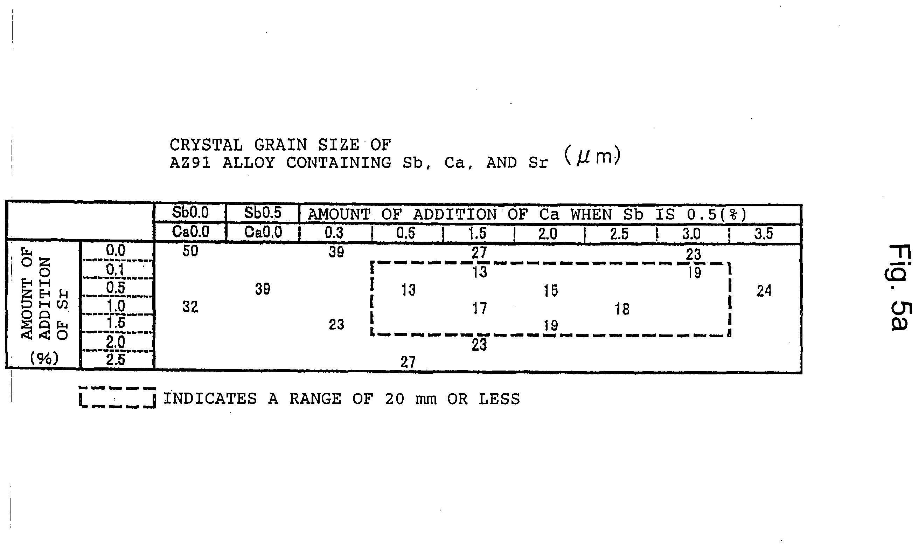

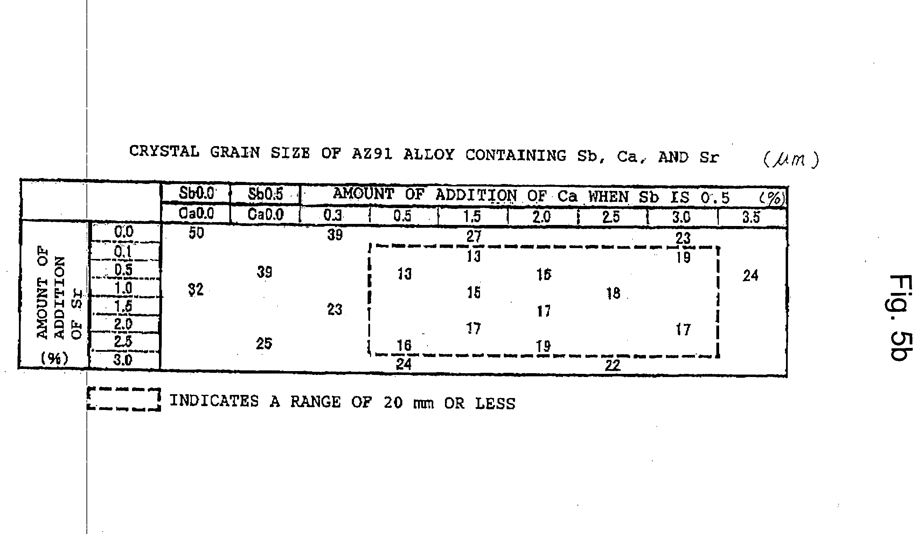

Fig. 5a and Fig. 5b show examples of the results of examining the relationship between Sb, Ca, and Sr specified to be at various levels and the crystal grain size. In this case, the AZ alloys refer to AZ91 + 0.5%Si alloy, AZ91 + 0.5%RE alloy, and AZ91 + 0.5%Zr alloy, in addition to the AZ91 alloy. As is clear from Fig. 5a and Fig. 5b, the size can be made 20 µm or less when combined addition is performed within the range surrounded by a dotted line, i.e. Sb is 0.5%, Ca is 0.5% to 3.0%, and Sr is 0.1% to 1.5%, in Fig. 5a and Sb is 0.5%, Ca is 0.5% to 3.0% and Sr is 0.1& to 2.5% in Fig. 5b.

The inventors of the present invention conducted another experiment, and found out that with respect to the above-described Sb and Ca, even when not both of them was added, the refining effect similar to that exerted by the alloys within the above-described range surrounded by the dotted line was able to be attained as long as at least any one of Sb: 0.1% to 2.5% and Ca: 0.05% to 3.5% is added. Therefore, Sr: 0.1% to 2.5% and at least any one of Sb: 0% to 1.5% and Ca: 0.05% to 3.5% are added in combination in order to attain this refining effect.

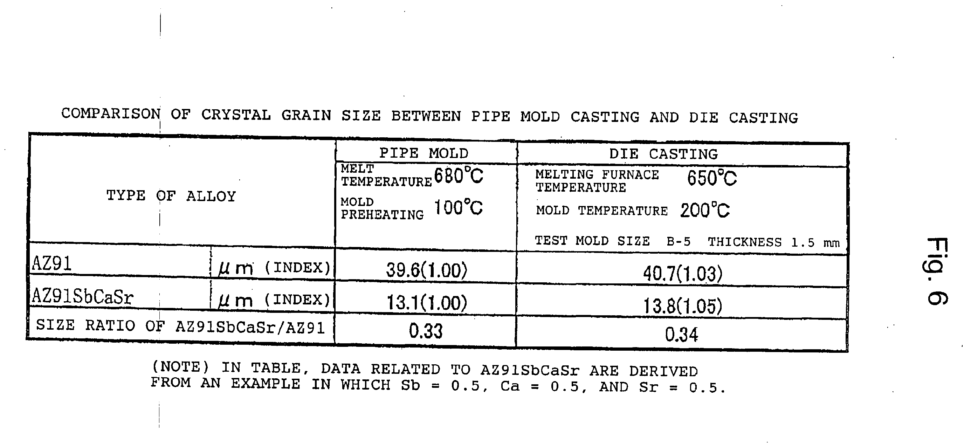

When an alloy in which Sb, Ca, and Sr were added to the AZ91 alloy was subjected to die-casting, and was compared with the AZ91 alloy, the crystal grain size of the die casting was substantially equal to the crystal grain size of the alloy cast into a pipe mold. On the other hand, it was made clear that the crystal grain size ratio of an AZ91SbCaSr alloy to the AZ91 alloy was about 1/3 even under different casting and molding conditions and, therefore, the size was made fine (refer to Fig. 6). Since it has been previously believed that the grain refining agent is useless to die castings, this is a new finding.

When the crystal grain size is made fine as described above, the network of grain boundaries becomes fine-grained and, thereby, the strength of the material is increased. In addition, the thickness of the β phase deposited at grain boundaries is reduced and, thereby, coarse intermetallic compounds, which cause corrosion and which tend to be generated at grain boundaries, become hard to be generated, so that the corrosion resistance can be improved. The strength and the corrosion resistance of the alloy in which Si, RE, and Zr or Si, RE, Zr, Sc, Y, Sn, and Ba are added to the AZ91 alloy are improved as well. These elements enter between intermetallic compounds at grain boundaries, and prevent the β phases and the like from becoming coarse. As a result, the characteristics are improved. It is believed that the operation mechanisms in the two cases are extremely similar to each other.

### (2) Room temperature strength and elongation characteristics and Melt fluidity

In consideration of the results in the above-described (1), the inventors of the present invention discussed on the room temperature strength characteristics and the room temperature elongation characteristics of the above-described AZ91 alloy, the AZ91-based base alloys in which Si, RE, and Zr or is at least any one of Si, RE, Zr, Sc, Y, Sn, and Ba were added to the AZ91 alloy, and alloys in which Sb, Ca, and Sr were further added to them (hereafter appropriately referred to as "Sb, Ca, and Sr containing alloy" simply).

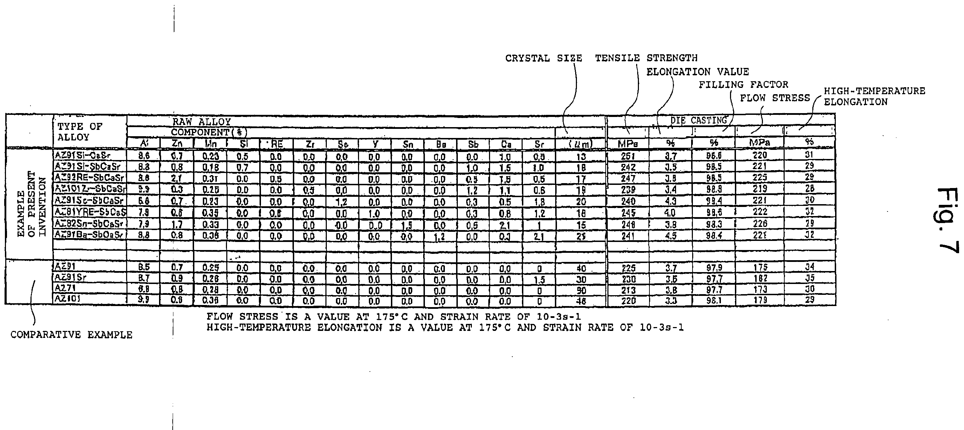

An ingot shown in Fig. 7 was used. By using a flat B5-size test mold of 1.5 mm in thickness, 80 plates of each alloy were molded at a molding temperature (melting furnace temperature) of 650°C and a mold temperature of 200°C with a cold chamber die casting machine. Each of 5 molded plates was divided into 3 equal parts in the transverse direction and 2 equal parts in the longitudinal direction, so that 6 pieces were prepared. These pieces were subjected to a density measurement by a water displacement method, the theoretical density was determined by summation based on component values analyzed separately and a density table of atoms described in Kagaku Binran, and the filling factor in the mold was calculated. Furthermore, test pieces for ambient temperature tensile strength test were cut from 5 molded plates, and the tensile strength and the elongation value at room temperature were measured with an Instron type tensile tester.

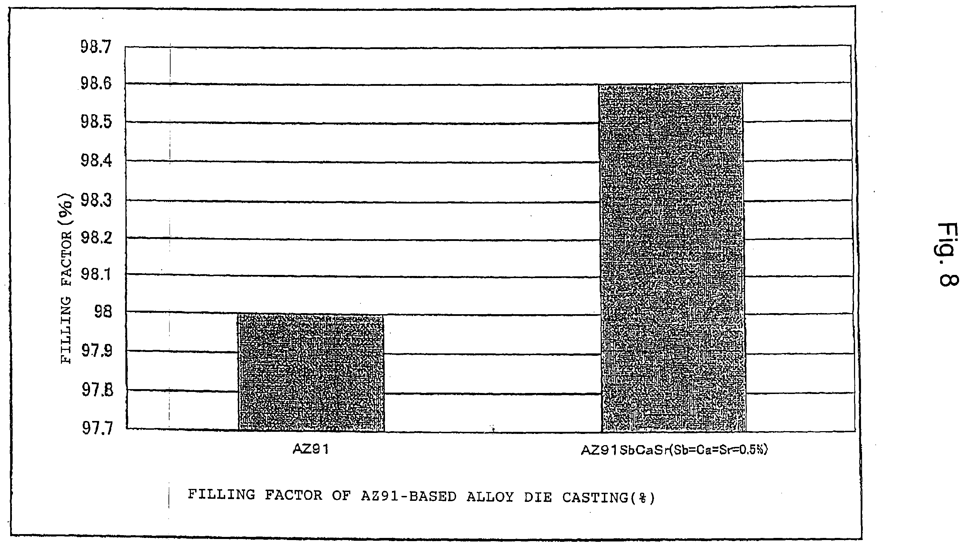

Fig. 8 shows the filling factor of the above-described die-cast test plate. It is clear that the filling rate is increased when Sb, Ca, and Sr are added.

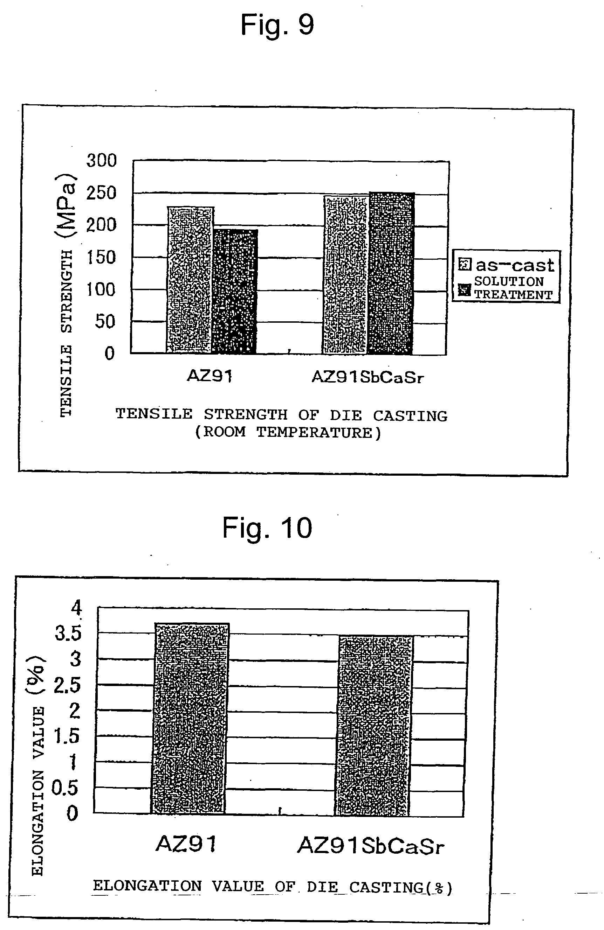

Fig. 9 shows the room temperature tensile strength of the die casting. The measurement results of the die-cast test piece subjected to a solution treatment at 410°C for 2 hours are also shown. As is clear from the drawing, in the case of as-cast, the Sb, Ca, and Sr containing alloy exhibits a value about 7% higher than the value of the AZ91-based alloy. The strength of the AZ91-based alloy was reduced by the solution treatment. As a result of observation of the test piece, bubbles were observed here and there. It is believed that these were responsible for deterioration of the properties and reduction of the filling factor. Even when the Sb, Ca, and Sr containing alloy according to the present embodiment was subjected to the solution treatment, reduction of the strength did not occur, nor was any bubble observed.

Fig. 10 shows the elongation value of the alloy. The Sb, Ca, and Sr containing alloy was substantially equivalent to the AZ91-based alloy. When Sb, Ca, and Sr were added to the AZ91-based alloy, no bubble was involved in the die casting, the filling factor was increased, and the tensile strength was increased. Consequently, it is clear that the die castability is improved.

On the other hand, with respect to the AZ91-based alloy to which Sb, Ca, and Sr are added, the inventors of the present invention discussed on each component, and it was found out that if Al was less than 6%, the above-described effect of improving the room temperature tensile strength was not attained. Therefore, it was assumed to be appropriate that the content of Al was specified to be 6% or more in order to improve the room temperature tensile strength.

With respect to the effect of the addition of Si, RE, and Zr, the melt fluidity was visually inspected as described above, and thereby, the above-described upper limits were determined. It was ascertained that when the contents exceeded these upper limits, the viscosity was increased, and the melt fluidity was adversely affected. With respect to the lower limit values, the room temperature tensile strength of the alloy including them was checked, and the amounts at which the strength was improved were specified to be lower limit values. The improvement effect due to the addition was +12% on the average.

Consequently, the inventors of the present invention determined that it was appropriate to specify the base alloy to be an alloy in which predetermined amounts of Si, RE, and Zr or was at least any one of Si, RE, Zr, Sc, Y, Sn and Ba were added to the AZ91 alloy of Al: 6% to 11.0%, Zn: 0.1% to 2.5%, and Mn: 0.1% to 0.5%. These base alloys are collectively called AZ91-based alloys, and each graph shows an average of the entire thereof.

### (3) High temperature creep characteristics

Next, in consideration of the results in the above-described (1) and (2), the inventors of the present invention discussed on the high-temperature creep characteristics of the Sb, Ca, and Sr containing alloy.

Test pieces were cut from 5 die castings, and creep data were determined at 175°C with a constant-speed high-temperature creep tester. For the purpose of comparison, a common AZ91 alloy or other AZ alloy was subjected to a similar measurement.

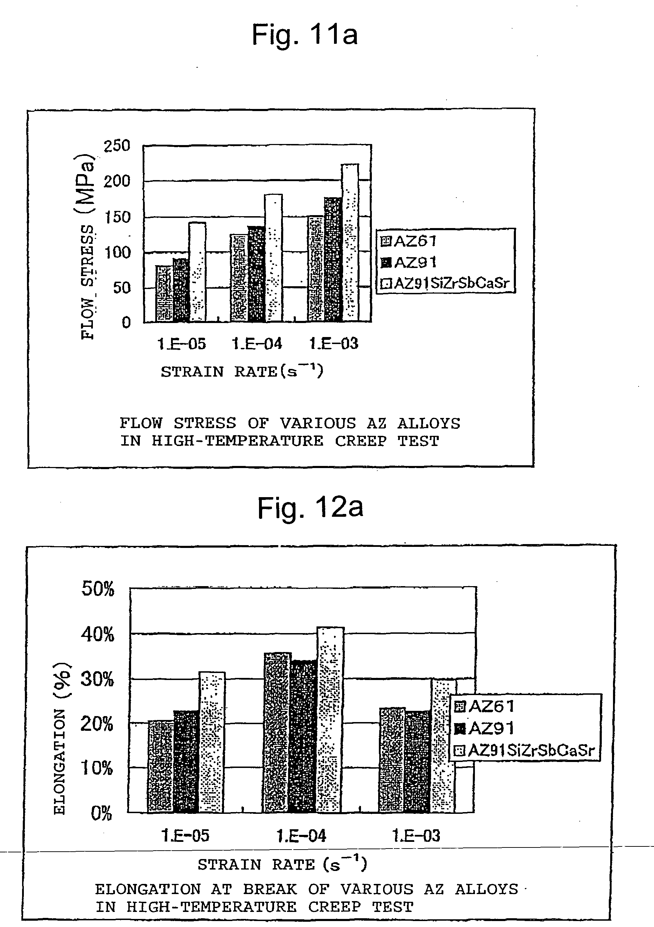

Fig. 11a, Fig. 11b, Fig. 12a, Fig. 12b, Fig. 13a, and Fig. 13b show the results of the constant-speed high-temperature creep test at 175°C.

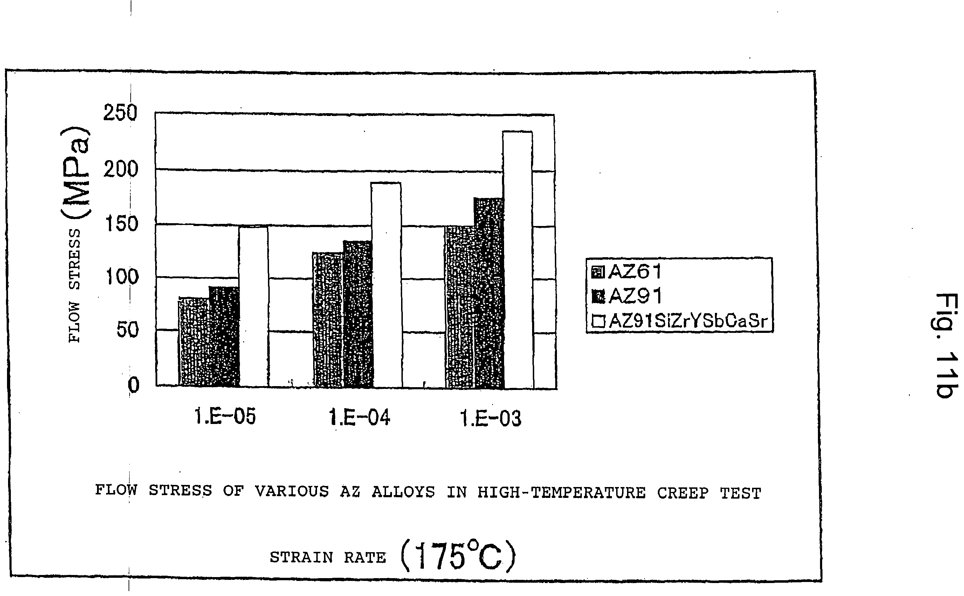

Fig. 11a and Fig. 11b show the relationship between the strain rate and the flow stress. It is clear that with respect to the Sb, Ca, and Sr containing alloy of the present embodiment in which Sb, Ca, and Sr are added to the AZ91-based alloy, the flow stress is improved by 15% to 30% at each strain rate and the creep resistance is increased compared with those of the AZ91 alloy.

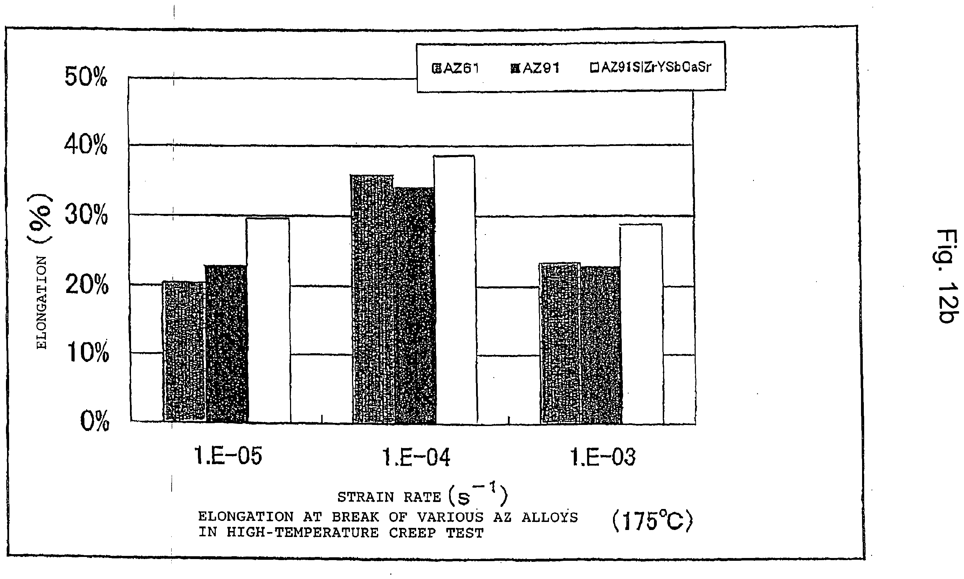

Fig. 12a and Fig. 12b show data of the creep elongation value. The AZ61 alloy and the AZ91 alloy exhibit 25% or less depending on the strain rate, whereas the Sb, Ca, and Sr containing alloy exhibits 35% or more at every strain rate.

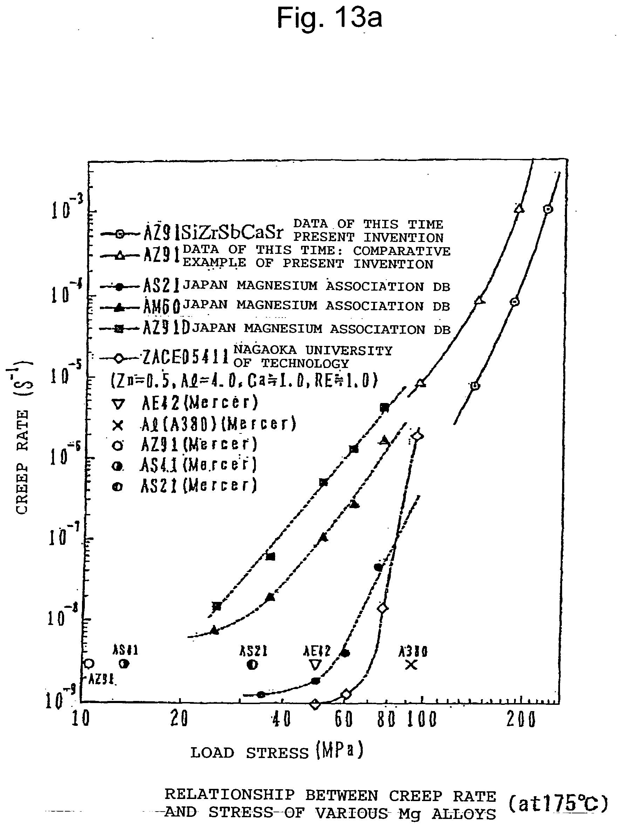

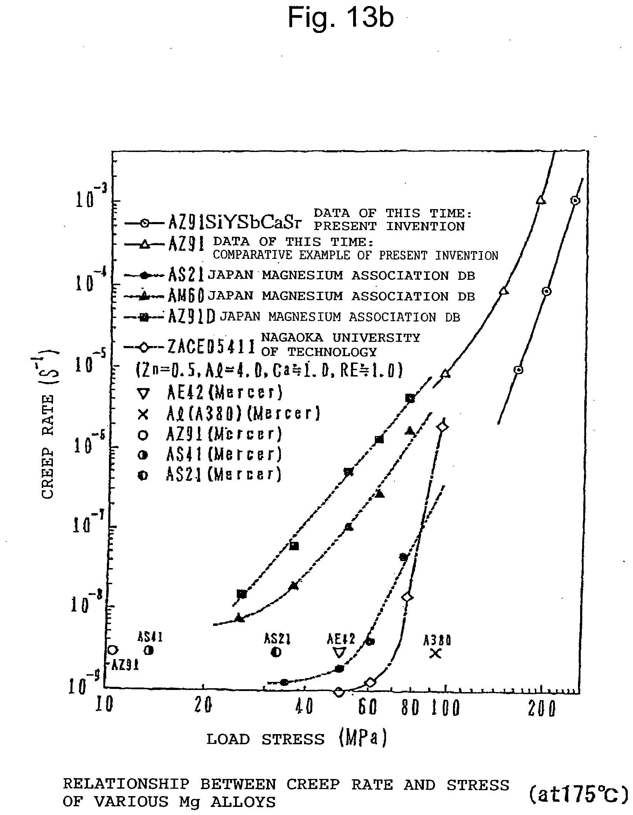

Fig. 13a and Fig. 13b are each a diagram in which the above-described results are written on a graph based on the data base of the Japan Magnesium Association for the purpose of comparison with other alloys. The measuring method of the above-described Association is a constant-stress method. According to the principle, both methods evaluate the same property. Data of other alloys at 175°C based on documents are also shown. In the drawing, [Mercer] indicates data based on a document, [W. E. MercerII "Magnesium Die Cast Alloys for Elevated Temperature Applications", SAE Paper No. 900788, SAEWarrendale, PA, U.S.A., 1990.], and [Nagaoka University of Technology] indicates data based on a document, [Yasuhiro Gokan, Shigeharu Kamado, Suguru Takeda, et al. "Mg-Zn-Al-Ca-RE kei Goukin daikasutozaino mikurososhiki oyobi kouonkyodotokusei (Microstructure and high temperature strength characteristics of Mg-Zn-Al-Ca-RE-based alloy die casting)" the Japan Institute of Light Metals Dai 103 kai shukitaikai kouengaiyoshu (No. 103 Annual Meeting in Fall Lecture Summary) P-16, P. 375].

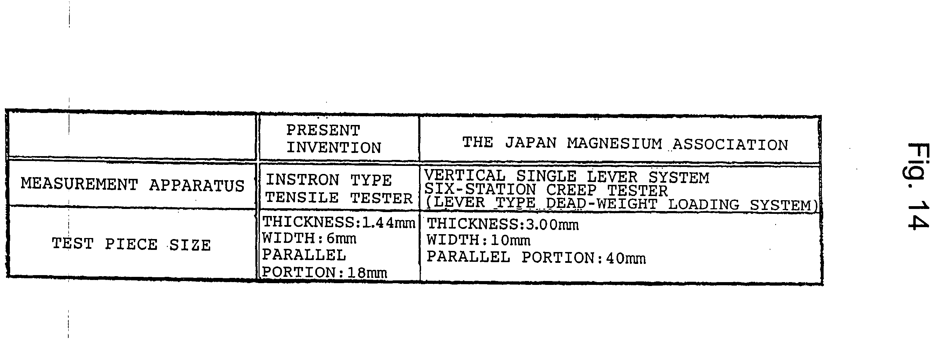

Fig. 14 shows measurement conditions of the creep test of the inventors of the present invention and the creep test of the Japan Magnesium Association, shown in Fig. 13a and Fig. 13b.

In Fig. 13a and Fig. 13b, a ZACE05411 alloy of the Nagaoka University of Technology rises crossing the AS21. Other data are the data on basic alloys of Mercer, and levels of the creep resistance of heat-resistant magnesium alloys, AS41, AS21, and AS42, can be understood.

The Sb, Ca, and Sr containing alloy according to the first embodiment is an extension of the creep characteristic curve of the AS21 alloy and, therefore, the creep resistance at 175°C is assumed to be equivalent to that of the AS21. Therefore, it is clear that an alloy having high-temperature creep characteristics higher than or equal to that of the AS21 having excellent high-temperature creep characteristics can be attained by adding Sb, Ca, and Sr to the AZ91-based alloy.

The inventors of the present invention separately discussed with respect to an influence exerted on the room temperature tensile strength by the component of the AZ91-based base alloy, to which Sb, Ca, and Sr were added, instead of the amounts of the addition of Sb, Ca, and Sr, as in the above description. When the content of Al exceeded 11%, deterioration of the elongation value exceeded 1% and, thereby, it was assumed to be appropriate that the content of Al was specified to be 11% or more in order to improve the high-temperature creep characteristics.

### (4) Corrosion resistance

The AZ91 alloy is an alloy having excellent corrosion resistance among the magnesium alloys. With respect to the alloy of the present embodiment, Si, RE, and Zr or Si, RE, Zr, Sc, Y, Sn, and Ba are added to produce the base alloy, and new elements, Sb, Ca, and Sr are added as grain refining agents. If the corrosion resistance is significantly deteriorated due to this, the alloy cannot be put to practical use. Therefore, the inventors of the present invention checked the corrosion resistance of the AZ-based Sb, Ca, and Sr containing alloy according to the present embodiment and the common AZ91 alloy by a salt spray test.

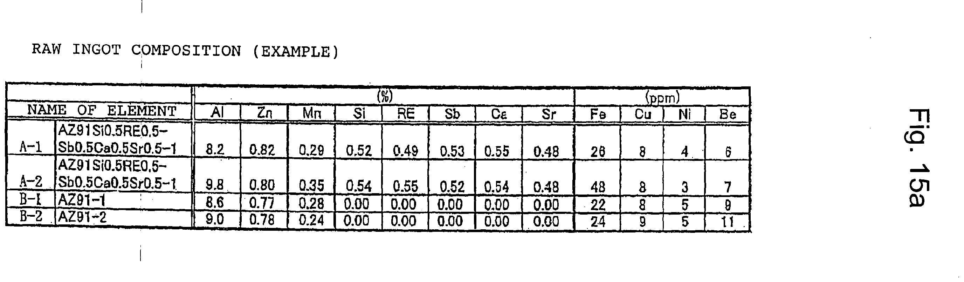

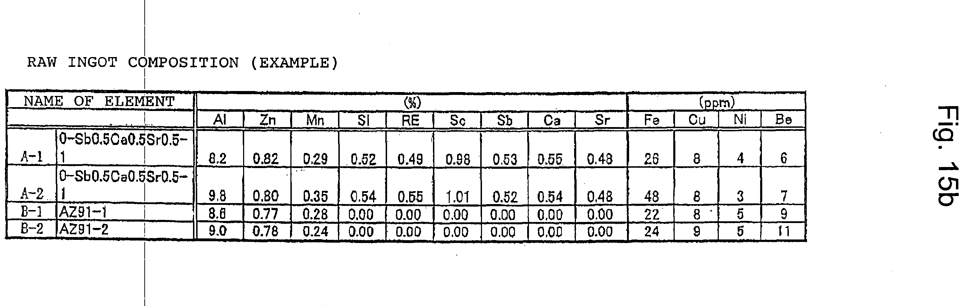

The outline of the salt spray test conducted is described below. A raw ingot having a composition shown in Fig. 15a or Fig. 15b was used. With respect to die-casting, alloys A and B to be tested were die-cast at each molding temperature (melting furnace temperature) of 620°C, 650°C, and 680°C, so that plates were prepared. With respect to the shape of a salt spray test sample, the molded plate had a thickness of 0.7 mm, and was cut into 95 mm × 130 mm. With respect to pretreatment conditions, no conversion treatment was conducted, and the surface was wiped with acetone.

With respect to the test method, Salt Spray CASS Test Instrument (produced by Suga Test Instruments Co., Ltd.) was used, the temperature in a test vessel was 35°C, and a spray pressure was 0.098 MPa (1 kgf/cm²). Under the above-described conditions, after spraying was performed continuously for 2 hours, the sample was washed with running water, and was stood for 16 hours. The degree of occurrence of corrosion was visually evaluated on a 1-to-5 scale, "almost no corrosion was observed: - 5", "slight corrosion was observed: + 4", "corrosion was observed: ++ 3", "corrosion was observed all over the surface: +++ 2", and "significant corrosion was observed all over the surface: 1".

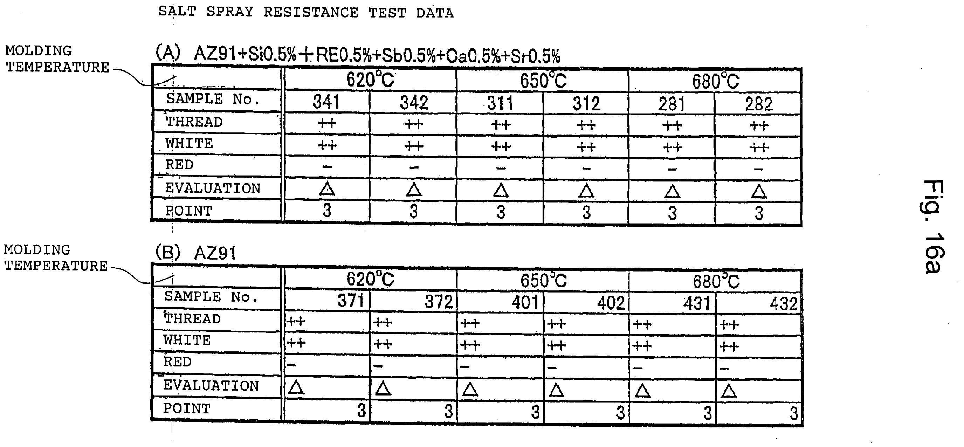

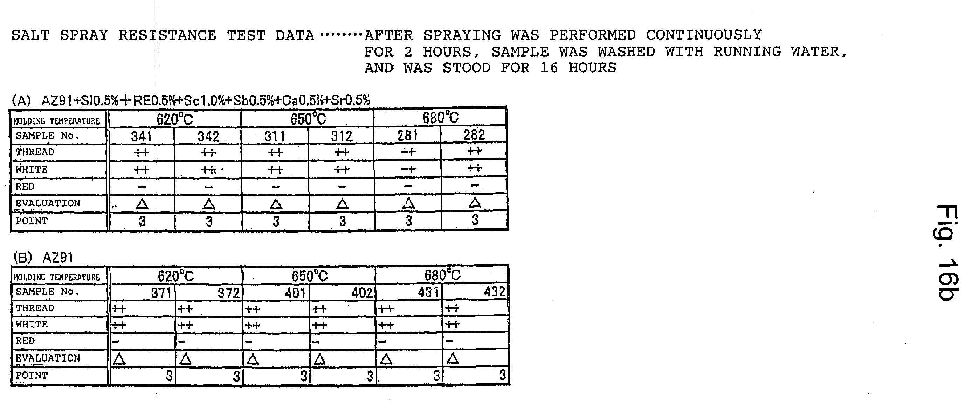

Fig. 16a and Fig. 16b show the results thereof. As shown in Fig. 16a and Fig. 16b, the AZ91-based 0.5%Sb, 0.5%Ca, and 0.5%Sr containing alloy according to the present embodiment was evaluated as the above-described "corrosion was observed: ++ 3". Therefore, it was made clear that there was not a significant difference in the corrosion resistance between the above-described two alloys, and the Sb, Ca, and Sr containing alloy of the present embodiment was able to ensure the corrosion resistance substantially equivalent to that of the common AZ alloy.

A second embodiment of the present invention will be described below with respect to the drawings.

The concept of describing the second embodiment is the same as for the first embodiment. Therefore, explanations which are already described for the first embodiment are not repeated.

### (5) Reduction of crystal grain size

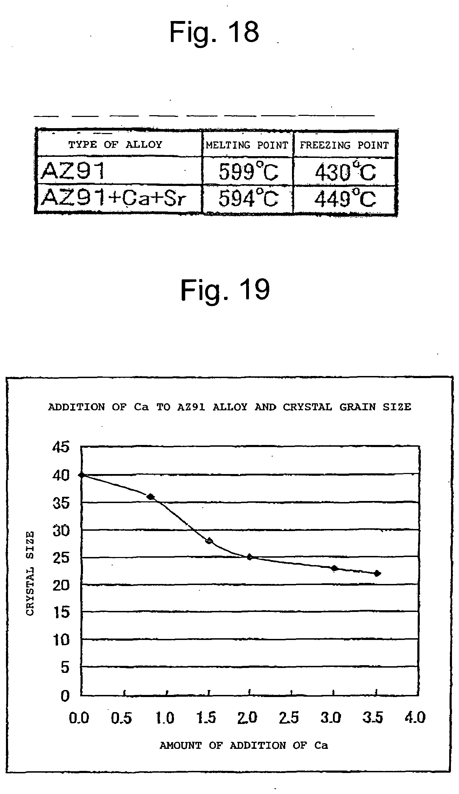

Initially, melting points of the AZ91 alloy and an alloy in which 1% of Ca and 0.5% of Sr were added to the AZ91 alloy were measured by a furnace cooling method. As a result, it was made clear that the alloy including Ca and Sr had a melting point slightly lower than the melting point of the AZ91 alloy (refer to Fig. 18). When each of the melts was remelted and poured into a respective casting mold, it was ascertained that every melt fluidity (corresponding to die castability in the case of application to a die casting) was good without causing any problem.

Next, 3 kg of AZ91 alloy was melted in an iron crucible coated with alumina, and was kept at 680°C. Thereafter, predetermined amounts of Ca and Sr were added, and the resulting melt was quickly cast by 100 g with a ladle in a pipe mold (thickness 3 mm, inner diameter 32 mm, depth 53 mm) heated to 100°C, so that a sample was prepared. The sample was transversely cut at the middle portion, and was subjected to a solution treatment at 410°C for 2 hours in order to make grain boundaries clear. Polishing was performed to attain a mirror-finished surface, etching was performed with a 6% picric acid alcohol solution, and microscopic examination was performed. The crystal grain size was determined by a microtome method of a crystal grain size number measuring method in compliance with JIS on iron and steel.

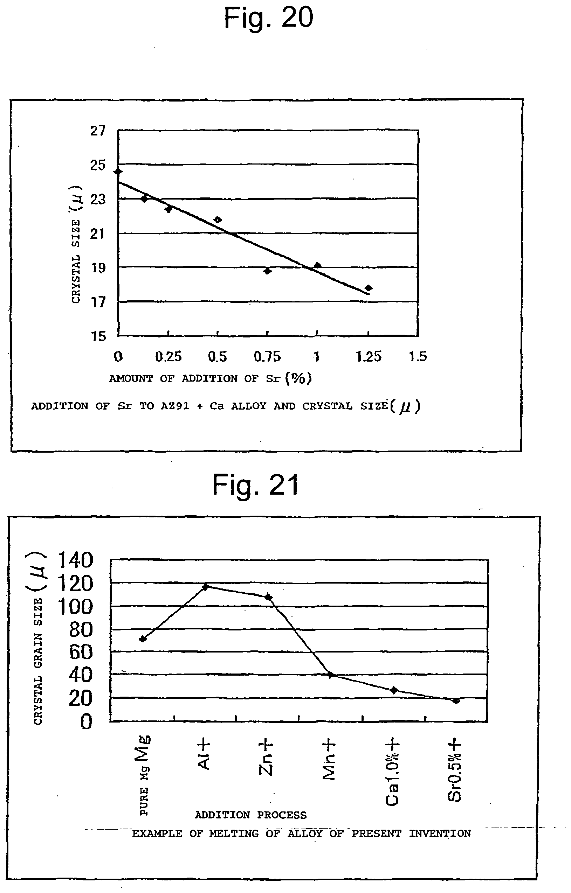

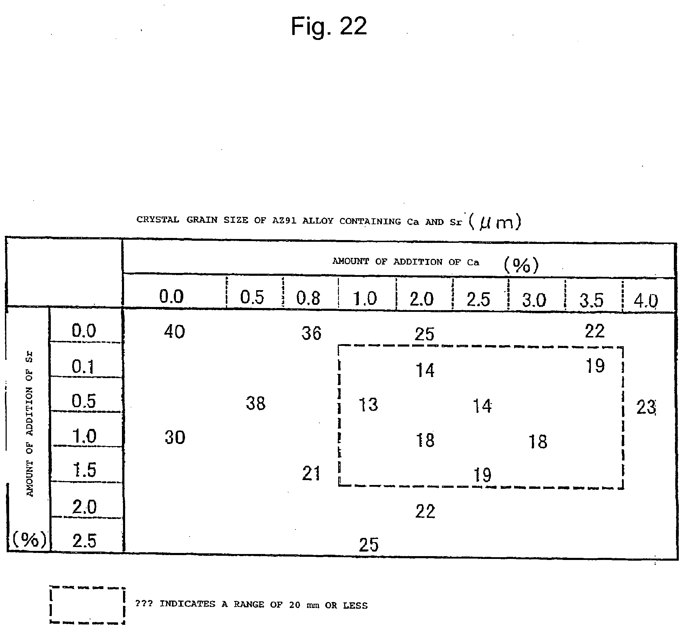

Fig. 19 shows the measurement results of the crystal grain size in the case where Ca was added to the AZ91 alloy. Likewise, Fig. 20 shows the results in the case where Sr was added to a melt in which 1% of Ca was added to the AZ91 alloy. Fig. 21 shows an example of melting of an AZ91CaSr alloy. Fig. 22 collectively shows the results of measurement of the crystal grain size on a sample basis where the amounts of addition of Ca and Sr were changed.

As is clear from Fig. 19, Fig. 20, Fig. 21, and Fig. 22, in the case of no addition, the grain size was 40 µm, and even when Ca or Sr was added alone, it was unable to make the grain size 20 µm or less. However, it was made clear that when combined addition was performed within the range surrounded by a dotted line, the grain size was allowed to become 20 µm or less. In this range, Ca is 1.0 percent by weight or more and 3.5 percent by weight or less, and Sr is 0.1 percent by weight or more and 1.5 percent by weight or less.

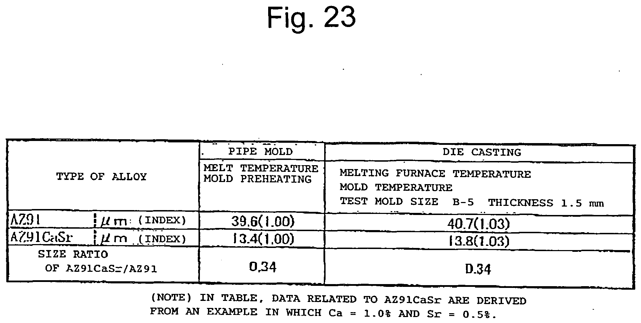

When an alloy in which Ca and Sr were added to the AZ91 alloy was subjected to die-casting and was compared with the AZ91 alloy, the crystal grain size of the die casting was 1.03 times the crystal grain size of the alloy cast into a pipe mold. On the other hand, it was made clear that the crystal grain size ratio of the AZ91CaSr alloy to the AZ91 alloy was a constant ratio, about 0.34, even under different casting and molding conditions and, therefore, the size was made fine (refer to Fig. 23). Since it has been previously believed that the grain refining agent is useless to die castings, this is a new finding.

When the crystal grain size is made fine as described above, the network of grain boundaries becomes fine-grained and, thereby, the strength of the material is increased. In addition, the thickness of the β phase deposited at grain boundaries is reduced and, thereby, coarse intermetallic compounds, which cause corrosion and which tend to be generated at grain boundaries, become hard to be generated, so that the corrosion resistance can be improved.

### (6) Room temperature strength and elongation characteristics and Melt fluidity

In consideration of the results in the above-described (5), the inventors of the present invention discussed on the room temperature strength characteristics and the room temperature elongation characteristics of the above-described alloys in which Ca and Sr were added to the AZ91 alloy (hereafter appropriately referred to as "Ca and Sr containing alloy" simply).

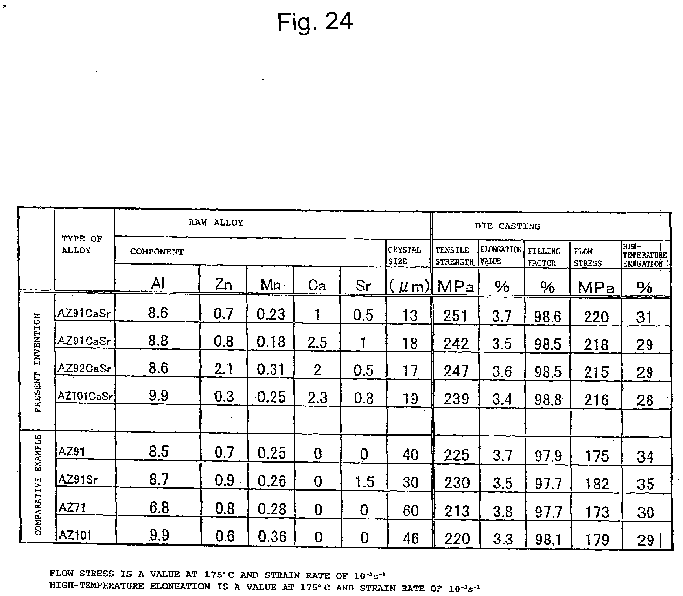

An ingot shown in Fig. 24 was used. By using a flat B5-size test mold of 1.5 mm in thickness, 80 plates of each alloy were molded at a molding temperature (melting furnace temperature) of 650°C and a mold temperature of 200°C with a cold chamber die casting machine. Each of 5 molded plates was divided into 3 equal parts in the transverse direction and 2 equal parts in the longitudinal direction, so that 6 pieces were prepared. These pieces were subjected to a density measurement by a water displacement method, the theoretical density was determined by summation based on component values analyzed separately and a density table of atoms described in Kagaku Binran, and the filling factor in the mold was calculated. Furthermore, test pieces for ambient temperature tensile strength test were cut from 5 molded plates, and the tensile strength and the elongation value at room temperature were measured with an Instron type tensile tester.

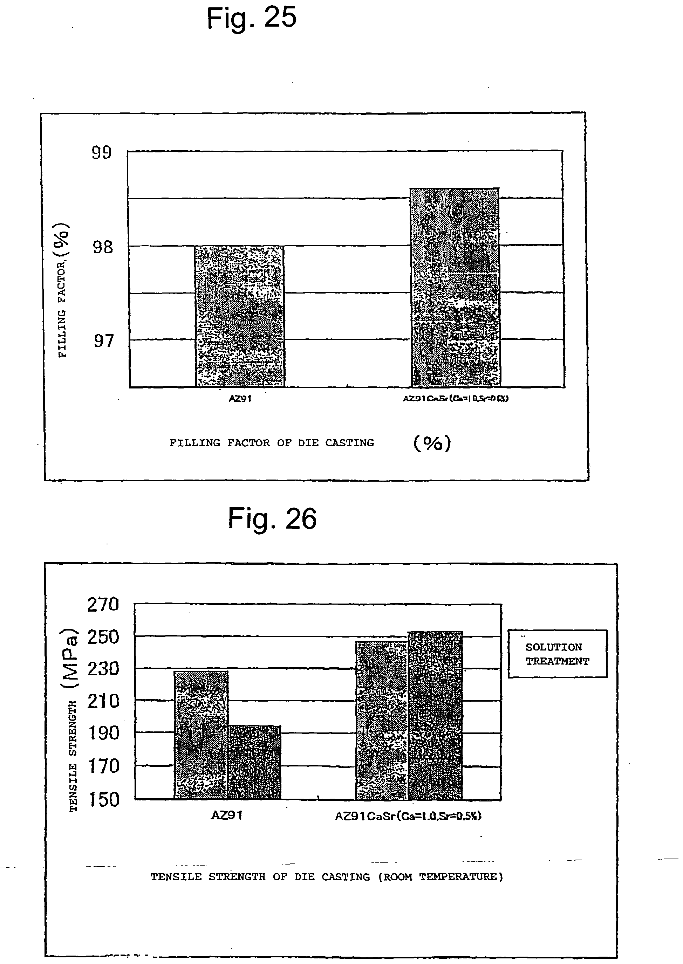

Fig. 25 shows the filling factor (average value of compositions of the present invention) of the above-described die-cast test plate. It is clear that the filling rate is increased when Ca and Sr are added.

Fig. 26 shows the room temperature tensile strength of the die casting. The measurement results of the die-cast test piece subjected to a solution treatment at 410°C for 2 hours are also shown. As is clear from the drawing, in the case of as-cast, the Ca and Sr containing alloy exhibits a value about 7% higher than the value of the AZ91 alloy. The strength of the AZ91 alloy was reduced by the solution treatment. As a result of observation of the test piece, bubbles were observed here and there. It is believed that these were responsible for deterioration of the properties and reduction of the filling factor. Even when the Ca and Sr containing alloy according to the present embodiment was subjected to the solution treatment, reduction of the strength did not occur, nor was any bubble observed.

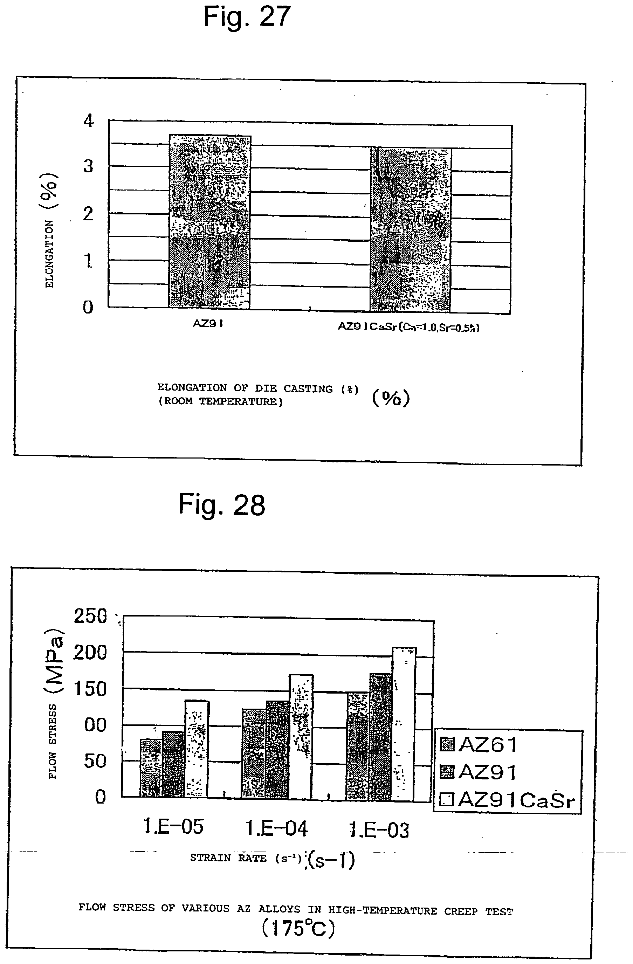

Fig. 27 shows the elongation value. The Ca and Sr containing alloy was substantially equivalent to the AZ91 alloy. When Ca and Sr were added to the AZ91 alloy, no bubble was involved in the die casting, the filling factor was increased, and the tensile strength was increased. Consequently, it is clear that the die castability is improved.

The inventors of the present invention discussed on an influence exerted on the room temperature tensile strength by components of the AZ91 alloy, to which Ca and Sr were added, instead of the amounts of the addition of Ca and Sr, and it was found out that if the content of Al was less than 7 percent by weight, the above-described effect of improving the room temperature tensile strength was not exerted. Therefore, it was assumed to be appropriate that the content of Al was specified to be 7 percent by weight or more in order to improve the room temperature tensile strength.

### (7) High temperature creep characteristics

Next, in consideration of the results in the above-described (5) and (6), the inventors of the present invention discussed on the high-temperature creep characteristics of the Ca and Sr containing alloy.

Test pieces were cut from 5 die castings, and creep data were determined at 175°C with a constant-speed high-temperature creep tester. For the purpose of comparison, a common AZ91 alloy or other AZ-based alloy was subjected to a similar measurement.

Fig. 28, Fig. 29, and Fig. 30 show the results of the constant-speed high-temperature creep test at 175°C.

Fig. 28 shows the relationship between the strain rate and the flow stress. It is clear that with respect to the Ca and Sr containing alloy of the present embodiment in which Ca and Sr are added to the AZ91 alloy, the flow stress is improved by 10% to 20% at each strain rate and the creep resistance is increased compared with those of the AZ91 alloy.

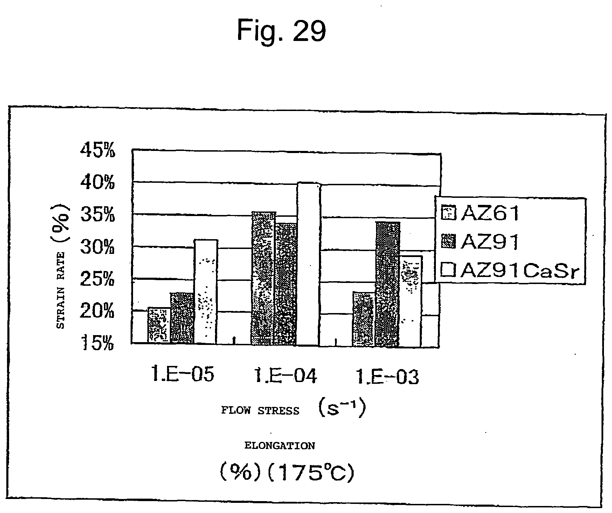

Fig. 29 shows data of the creep elongation value. The AZ61 alloy and the AZ91 alloy exhibit 25% or less depending on the strain rate, whereas the Ca and Sr containing alloy exhibits 29% or more at every strain rate.

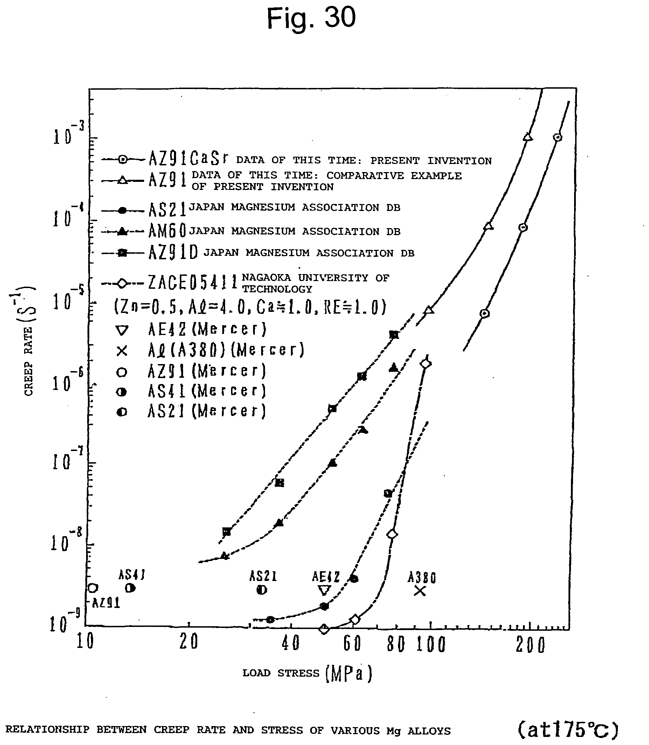

Fig. 30 is a diagram in which the above-described results are written on a graph based on the data base of the Japan Magnesium Association for the purpose of comparison with other alloys. The measuring method of the above-described Association is a constant-stress method. According to the principle, both methods evaluate the same property. Data of other alloys at 175°C based on documents are also shown.

In Fig. 30, a ZACE05411 alloy of the Nagaoka University of Technology rises crossing the AS21. Other data are the data on basic alloys of Mercer, and levels of the creep resistance of heat-resistant magnesium alloys, AS41, AS21, and AS42, can be understood.

The Ca and Sr containing alloy according to the second embodiment is an extension of the creep characteristic curve of the AS21 alloy and, therefore, the creep resistance at 175°C is assumed to be equivalent to that of the AS21. Therefore, it is clear that an alloy having high-temperature creep characteristics equivalent to that of the AS21 having excellent high-temperature creep characteristics can be attained by adding Ca and Sr to the AZ91.

The inventors of the present invention separately discussed with respect to an influence exerted on the room temperature tensile strength by the component of the AZ91 alloy, to which Ca and Sr were added, instead of the amounts of the addition of Ca and Sr, as in the above description. When the content of Al exceeded 11 percent by weight, deterioration of the elongation value exceeded 1% and, thereby, it was assumed to be appropriate that the content of Al was specified to be 11 percent by weight or more in order to improve the high-temperature creep characteristics.

The AS21 contains Si, and the AE42 and the ZACE05411 contains rare earths. All of these elements exert adverse effects on the molding conditions. On the other hand, the Ca and Sr containing alloy of the present embodiment also improves the die castability, as shown in the above-described (6).

### (8) Corrosion resistance

The AZ91 alloy is an alloy having excellent corrosion resistance among the magnesium alloys. With respect to the alloy of the present embodiment, new elements, Ca and Sr, are added as grain refining agents. If the corrosion resistance is significantly deteriorated due to this, the alloy cannot be put to practical use. Therefore, the inventors of the present invention checked the corrosion resistance of the Ca and Sr containing alloy according to the present embodiment and the common AZ91 alloy by a salt spray test.

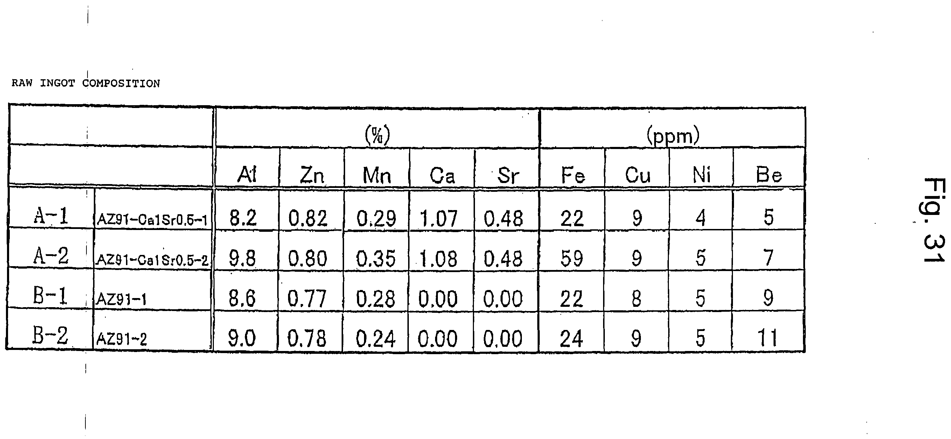

The outline of the salt spray test conducted is described below. A raw ingot having a composition shown in Fig. 31 was used. With respect to die-casting, alloys A and B to be tested were die-cast at each molding temperature (melting furnace temperature) of 620°C, 650°C, and 680°C, so that plates were prepared. With respect to the shape of a salt spray test sample, the molded plate had a thickness of 0.7 mm, and was cut into 95 mm × 130 mm. With respect to pretreatment conditions, no conversion treatment was conducted, and the surface was wiped with acetone.

With respect to the test method, Salt Spray CASS Test Instrument (produced by Suga Test Instruments Co., Ltd.) was used, the temperature in a test vessel was 35°C, and a spray pressure was 0.098 MPa (1 kgf/cm²). Under the above-described conditions, after spraying was performed continuously for 2 hours, the sample was washed with running water, and was stood for 16 hours. The degree of occurrence of corrosion was visually evaluated on a 1-to-5 scale, "almost no corrosion was observed: - 5", "slight corrosion was observed: + 4", "corrosion was observed: ++ 3", "corrosion was observed all over the surface: +++ 2", and "significant corrosion was observed all over the surface: 1".

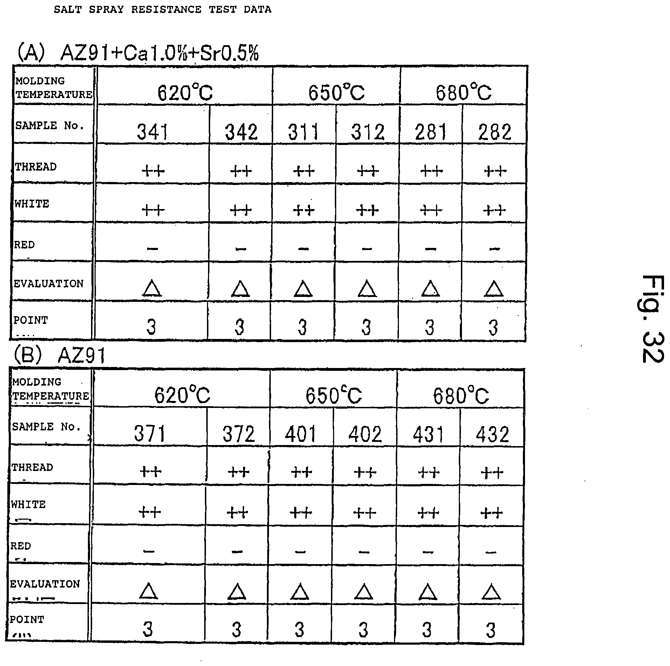

Fig. 32 shows the results thereof. As shown in Fig. 32, the AZ91 + 1.0%Ca + 0.5%Sr alloy according to the present embodiment was evaluated as the above-described "corrosion was observed: ++ 3", and the common AZ91 alloy was also evaluated as "corrosion was observed: ++ 3". Therefore, it was made clear that there was not a significant difference in the corrosion resistance between the above-described two alloys, and the Ca and Sr containing alloy of the present embodiment was able to ensure the corrosion resistance substantially equivalent to that of the common AZ alloy.

As described above, according to both presented embodiments, a die casting magnesium alloy provided with a room temperature tensile strength equivalent to the AZ91 alloy and provided with high-temperature creep resistance while ensuring excellent die castability and corrosion resistance can be attained. In particular, the alloy according to the present embodiment is useful for magnesium die castings which covers from a room temperature region to a high-temperature region in applications to transmission covers and oil pans in which a weight reduction effect can be exerted, car air conditioner piston portion housings, airbag covers, engine covers, or the like.

## Claims

1. A die casting magnesium alloy **characterized by** comprising:
an AZ91-based alloy comprising
6.0 to 11.0 percent by weight of aluminum;
0.1 to 2.5 percent by weight of zinc;
0.1 to 0.5 percent by weight of manganese;
0.1 to 2.5 percent by weight of strontium;
0.1 to 1.5 percent by weight of antimony;
0.05 to 3.5 percent by weight of calcium; and
the balance of magnesium and inevitably included other components;
wherein the die casting magnesium alloy optionally comprises:
at least one of silicon (Si): 0.1 to 1.5 percent by weight, mish metal containing a simple substance of rare earth (RE): 0.1 to 1.2 percent by weight, zirconium (Zr): 0.2 to 0.8 percent by weight, scandium (Sc): 0.2 to 3.0 percent by weight, yttrium (Y): 0.2 to 3.0 percent by weight, tin (Sn): 0.2 to 3.0 percent by weight, and barium (Ba): 0.2 to 3.0 percent by weight.

2. The die casting magnesium alloy according to Claim 1, wherein the AZ91-based alloy comprises 7.0 to 11.0 percent by weight of aluminum.

3. The magnesium die casting obtainable by die-casting of the die casting magnesium alloy according to any one of claims 1 or 2.

## Patentansprüche

1. Druckguss-Magnesiumlegierung, **dadurch gekennzeichnet, dass** sie umfasst:
eine Legierung auf AZ91-Basis, umfassend
6,0 bis 11,0 Gew.-% Aluminium,
0,1 bis 2,5 Gew.-% Zink,
0,1 bis 0,5 Gew.-% Mangan,
0,1 bis 2,5 Gew.-% Strontium,
0,1 bis 1,5 Gew.-% Antimon,
0,05 bis 3,5 Gew.-% Calcium und
den Rest an Magnesium, und zwangsläufig andere Komponenten umfasst,
wobei die Druckguss-Magnesiumlegierung gegebenenfalls umfasst:
wenigstens eines von Silicium (Si): 0,1 bis 1,5 Gew.-%, Mischmetall, enthaltend eine einfache Seltenerd (SE)-Substanz: 0,1 bis 1,2 Gew.-%, Zirkonium (Zr): 0,2 bis 0,8 Gew.-%, Scandium (Sc): 0,2 bis 3,0 Gew.-%, Yttrium (Y) : 0,2 bis 3,0 Gew.-%, Zinn (Sn): 0,2 bis 3,0 Gew.-% und Barium (Ba): 0,2 bis 3,0 Gew.-%.

2. Druckguss-Magnesiumlegierung gemäß Anspruch 1, wobei die Legierung auf AZ91-Basis 7,0 bis 11,0 Gew.-% Aluminium umfasst.

3. Magnesiumdruckguss, der durch Druckgießen der Druckguss-Magnesiumlegierung gemäß einem der Ansprüche 1 oder 2 erhalten werden kann.

## Revendications

1. Alliage à coulée au magnésium **caractérisé par le fait qu'**il comprend :
un alliage à base de AZ91 comprenant
de 6,0 à 11,0 pour cent en poids d'aluminium ;
de 0,1 à 2,5 pour cent en poids de zinc ;
de 0,1 à 0,5 pour cent en poids de manganèse ;
de 0,1 à 2,5 pour cent en poids de strontium ;
de 0,1 à 1,5 pour cent en poids d'antimoine ;
de 0,05 à 3,5 pour cent en poids de calcium ; et
le reste étant constitué de magnésium et d'autres composants inévitablement inclus ;
dans lequel l'alliage à coulée au magnésium comprend facultativement :
au moins l'un du silicium (Si) : de 0,1 à 1,5 pour cent en poids, d'un mishmétal contenant une substance simple de terre rare (TR) : de 0,1 à 1,2 pour cent en poids, du zirconium (Zr) : de 0,2 à 0,8 pour cent en poids, du scandium (Sc): de 0,2 à 3,0 pour cent en poids, de l'yttrium (Y) : de 0,2 à 3,0 pour cent en poids, de l'étain (Sn) : de 0,2 à 3,0 pour cent en poids et du baryum (Ba) : de 0,2 à 3,0 pour cent en poids.

2. Alliage à coulée au magnésium selon la revendication 1, dans lequel l'alliage à base de AZ91 comprend de 7,0 à 11,0 pour cent en poids d'aluminium.

3. Moulage mécanique de magnésium pouvant être obtenu par coulée de l'alliage à coulée au magnésium selon l'une quelconque des revendications 1 ou 2.
